# EUROPEAN PATENT APPLICATION

(11) **EP 4 656 999 A2**
(43) Date of publication of application: **03.12.2025**
(21) Application number: 25208277.1
(22) Date of filing: 31.10.2023
(51) Int. Cl.: F28D 9/00

(54) **HEAT EXCHANGER**

(62) Divisional of application: 23207093.8
(71) Applicant: Modine Manufacturing Company, Racine Wisconsin 53403 (US)
(72) Inventor: Grosskopf, Thomas, Filderstadt (DE); Lippke, Frank, Filderstadt (DE)
(74) Representative: Ter Meer Steinmeister & Partner

(57) **Abstract**

A heat exchanger has a first low-pressure inlet, a second low-pressure inlet, a low-pressure outlet, a high-pressure inlet, a high-pressure outlet, and a plurality of plates. Each plate in the plurality of plates has a first low-pressure opening fluidly connected to the first low-pressure inlet, a second low-pressure opening fluidly connected to the second low-pressure inlet, a third low-pressure opening fluidly connected to the low-pressure outlet, a first high-pressure opening fluidly connected to the high-pressure inlet, and a second high-pressure opening fluidly connected to the high-pressure outlet. The plurality of plates includes a first group of plates and a second group of plates. The first group of plates are alternatingly stacked with the second group of plates. The first group of plates and the second group of plates are configured to allow the high-pressure fluid to transfer heat to the low-pressure fluid.

## Description

### BACKGROUND

The present invention relates to heat exchanger. More specifically, the present invention relates to a heat exchanger for example for use in a thermal management system for an electric vehicle in one embodiment.

Thermal management systems are used in electric vehicles to cool the power train components of the vehicle and to condition the air to the cabin. Traditional thermal management systems include, a chiller, an evaporator, a compressor, a condenser, and expansion valves.

Aspects of the invention will become apparent by consideration of the detailed description and accompanying drawings.

### SUMMARY

The object is solved by the features of the independent claims. Preferred embodiments are given in the dependent claims.

According to an exemplary construction, the invention includes a heat exchanger having a first low-pressure inlet, a second low-pressure inlet, a low-pressure outlet, a high-pressure inlet, a high-pressure outlet, a plurality of plates, a first space, and a second space. The first low-pressure inlet is configured to connect to a first low-pressure line to supply a low-pressure fluid to the first low-pressure inlet. The second low-pressure inlet is configured to connect to a second low-pressure line to supply the low-pressure fluid to the second low-pressure inlet. The low-pressure outlet is configured to connect to a third low-pressure line to supply the low-pressure fluid to the third low-pressure line. The high-pressure inlet is configured to connect to a first high-pressure line to supply a high-pressure fluid to the high-pressure inlet. The high-pressure outlet is configured to connect to a second high-pressure line to supply the high-pressure fluid to the second high-pressure line. Each plate in the plurality of plates has a first low-pressure opening fluidly connected to the first low-pressure inlet, a second low-pressure opening fluidly connected to the second low-pressure inlet, a third low-pressure opening fluidly connected to the low-pressure outlet, a first high-pressure opening fluidly connected to the high-pressure inlet, and a second high-pressure opening fluidly connected to the high-pressure outlet. The plurality of plates include a first group of plates and a second group of plates. The first group of plates are alternatingly stacked with the second group of plates. The first group of plates and the second group of plates are configured to allow the high-pressure fluid to transfer heat to the low-pressure fluid. The first space is formed between one of the plates of the first group of plates and one of the plates of the second group of plates when the plate of the first group of plates is positioned below the plate of the second group of plates. The second space is formed between one of the plates of the first group of plates and one of the plates of the second group of plates when the plate of the second group of plates is positioned below the plate of the first group of plates. The first space provides fluid communication between the first low-pressure opening and the third low-pressure opening, provides fluid communication between the second low-pressure opening and the third low-pressure opening, and inhibits fluid communication between the first high-pressure opening and the second high-pressure opening. The second space provides fluid communication between the first high-pressure opening and the second high-pressure opening, inhibits fluid communication between the first low-pressure opening and the third low-pressure opening, and inhibits fluid communication between the second low-pressure opening and the third low-pressure opening.

According to another exemplary construction, the invention includes a heat exchanger having a low-pressure inlet configured to connect to a low-pressure inlet line to supply a low-pressure fluid to the low-pressure inlet, a low-pressure outlet configured to connect to a low-pressure outlet line to supply the low-pressure fluid to the low-pressure outlet line, a high-pressure inlet configured to connect to a high-pressure inlet line to supply a high-pressure fluid to the high-pressure inlet, a high-pressure outlet configured to connect to a high-pressure outlet line to supply the high-pressure fluid to the second high-pressure line, a plurality of plates, a first space, and a second space. Each of the plates in the plurality of plates has a low-pressure plate inlet fluidly connected to the low-pressure inlet, a low-pressure plate outlet fluidly connected to the low-pressure outlet, a high-pressure plate inlet fluidly connected to the high-pressure inlet, and a high-pressure plate outlet fluidly connected to the high-pressure outlet. The plurality of plates includes a first group of plates and a second group of plates. The first group of plates are alternatingly stacked with the second group of plates. The first group of plates and the second group of plates are configured to allow the high-pressure fluid to transfer heat to the low-pressure fluid. The first space is formed between one of the plates of the first group of plates and one of the plates of the second group of plates when the plate of the first group of plates is positioned below the plate of the second group of plates. The second space is formed between one of the plates of the first group of plates and one of the plates of the second group of plates when plate of the second group of plates is positioned below the plate of the first group of plates. The first space provides fluid communication between the low-pressure plate inlet and the low-pressure plate outlet and inhibits fluid communication between the high-pressure plate inlet and the high-pressure plate outlet. The second space provides fluid communication between the high-pressure plate inlet and the high-pressure plate outlet and inhibits fluid communication between the low-pressure plate inlet and the low-pressure plate outlet. The low-pressure plate inlet and the low-pressure plate outlet have a first cross-sectional shape, and the high-pressure plate inlet and the high-pressure plate outlet have a second cross-sectional shape. The first cross-sectional shape is different than the second cross-sectional shape.

In the following optional features are provided, which can be added to one or both of the above mentioned claims alone or in combination or in sub combination.

In one or more embodiments, each of the plates in the first group of plates may include a wall between the first low-pressure opening and the second low-pressure opening.

In one or more embodiments, the wall may at least partially inhibit fluid communication between the first low-pressure opening and the second low-pressure opening.

In one or more embodiments, one of the first group of plates and one of the second group of plates may be adjacent plates.

In one or more embodiments, the adjacent plates may be spaced a first height apart.

In one or more embodiments, the wall may have a second height and the first height may be the same as the second height.

In one or more embodiments, the first height may be larger than the second height.

In one or more embodiments, the first low-pressure opening may be a first distance away from the third low-pressure opening.

In one or more embodiments, the second low-pressure opening may be a second distance away from the third low-pressure opening.

In one or more embodiments, the wall may extend along each of the plates in the first group of plates for a third distance.

In one or more embodiments, the third distance may be less than the first distance and the second distance.

In one or more embodiments, the third distance may be less than half of the first distance and/or less than half of the second distance.

In one or more embodiments, the first distance may be the same as the second distance.

In one or more embodiments, the first distance may be the less than the second distance.

In one or more embodiments, a plate body of each of the plates may define a rectangular shape.

In one or more embodiments, a plate body of each of the plates may include a first side, a second side opposite the first side, a first end, and a second end opposite the first end, a first corner between the first side and the first end, a second corner between the first side and the second end, a third corner between the second side and the first end, and a fourth corner between the second side and the second end.

In one or more embodiments, the first low-pressure opening may be located adjacent the first corner.

In one or more embodiments, the second low-pressure opening may be located adjacent the third corner.

In one or more embodiments, the third low-pressure opening may be located along the second end.

In one or more embodiments, the first high-pressure opening may be located along the first side.

In one or more embodiments, the second high-pressure opening may be located along the second side.

In one or more embodiments, the third low-pressure opening may be located adjacent the fourth corner.

In one or more embodiments, the first high-pressure opening may be located along the first side, and the second high-pressure opening may be located along the second side.

In one or more embodiments, the first low-pressure opening may be located adjacent the first corner, the second low-pressure opening may be located adjacent the third corner, the third low-pressure opening may be located adjacent the second corner, the first high-pressure opening may be located adjacent the fourth corner, and the second high-pressure opening may be located along the first side.

In one or more embodiments, a plate body of each of the plates may define a pentagon and includes five corners.

In one or more embodiments, the first low-pressure opening, the second low-pressure opening, the third low-pressure opening, the first high-pressure opening, and the second high-pressure opening may be each located in one of the five corners.

In one or more embodiments, at least some of the plates in the plurality of plates may include a turbulator that extends at least partially along a surface of the plate.

In one or more embodiments, the turbulator may include a plurality of fins that each have a fin width.

In one or more embodiments, the first low-pressure opening may be spaced a distance away from the perimeter of the plates.

In one or more embodiments, the distance may be at least twice the fin width.

In one or more embodiments, the first low-pressure opening, the second low-pressure opening, the third low-pressure opening may have a first shape.

In one or more embodiments, the first high-pressure opening and the second high-pressure opening may have a second shape.

In one or more embodiments, the first shape may be different than the second.

### BRIEF DESCRIPTION OF THE DRAWINGS

FIG. 1 is schematic view of an exemplary thermal management system.
FIG. 2 is schematic view of the thermal management system of FIG. 1 showing the fluid flow paths.
FIG. 3 is a top perspective view of a heat exchanger of the thermal management system of FIG. 2 according to one embodiment.
FIG. 4 is a bottom perspective view of the heat exchanger of FIG. 3.
FIG. 5 is a section view of the heat exchanger of FIG. 3.
FIGS. 6A-6C are views of a plate of the heat exchanger of FIG. 3 according to one embodiment.
FIG. 7 is a perspective view of an end plate of the heat exchanger of FIG. 3 of one embodiment.
FIG. 8 is a perspective view of a top plate of the heat exchanger of FIG. 3 of one embodiment.
FIG. 9 is a top view of a first type of plate of the heat exchanger of FIG. 3 of one embodiment.
FIG. 10 a top view of a second type of plate of the heat exchanger of FIG. 3 of to one embodiment.
FIG. 11 is a section view of the first type of plate of FIG. 9 and the second type of plate of FIG. 10 stacked together.
FIG. 12 a top view of the first type of plate of FIG. 9 having a separation wall of one embodiment.
FIG. 13 is a section view of the first type of plate of FIG. 12 and the second type of plate of FIG. 10 stacked together.
FIG. 14 is a perspective view of a plate with a turbulator according to one embodiment.
FIG. 15 is a section view of the plates and turbulators of FIG. 14 stacked together.
FIGS. 16A-16B are detailed view of a turbulator according to one embodiment.
FIG. 17 is a detailed view of a turbulator according to another embodiment.
FIG. 18 is a detailed view of a turbulator according to yet another embodiment.
FIG.19 perspective view of heat exchanger of FIG. 3 mounted to a valve block of one embodiment.
FIG. 20 is a bottom view of the heat exchanger and valve block of FIG. 19.
FIG. 21 is a section view of the heat exchanger and valve block of FIG. 19.
FIG. 22 is another section view of the heat exchanger and valve block of FIG. 19.
FIG. 23 is a top perspective view of the heat exchanger and valve block of FIG. 19 with a second valve block according to one embodiment.
FIG. 24 is a bottom perspective view of the heat exchanger, the valve block, and a second valve block of FIG. 23.
FIG. 25 a section view of the heat exchanger, the valve block, and a second valve block of FIG. 23.
FIG. 26 is a perspective view of a heat exchanger according to another embodiment.
FIG. 27 is a perspective view of a heat exchanger according to another embodiment.
FIGS. 28A-28C are top views of a plate body for a heat exchanger according to an embodiment.
FIGS. 29A-29C are top views of a plate body for a heat exchanger according to an embodiment.
FIG. 30 is a top view of a plate body for a heat exchanger according to an embodiment.
FIG. 31 is a top view of a plate body for a heat exchanger according to an embodiment.
FIGS. 32A-32D are top views of a plate body for a heat exchanger according to an embodiment.
FIGS. 33A-33B are top views of a plate body for a heat exchanger according to an embodiment.
FIGS. 34A-34B is a top view of a plate body for a heat exchanger according to an embodiment.

### DETAILED DESCRIPTION

Before any constructions of the invention are explained in detail, it is to be understood that the invention is not limited in its application to the details of construction and the arrangement of components set forth in the following description or illustrated in the following drawings. The invention is capable of other constructions and of being practiced or of being carried out in various ways.

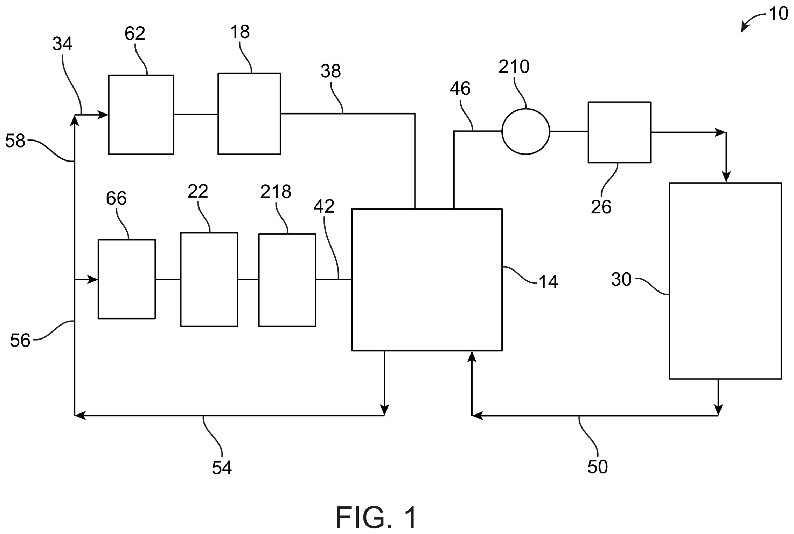

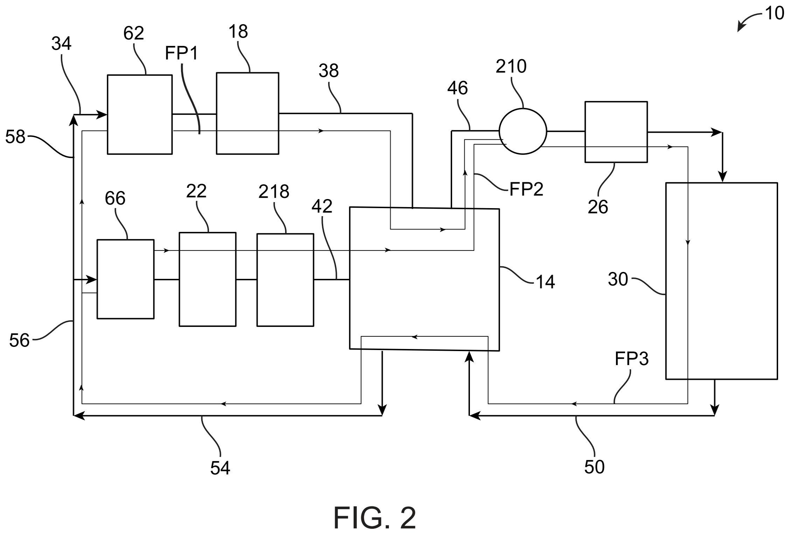

FIGS. 1-2 illustrate a thermal management system for example for use in an electric or hybrid vehicle in one application. The thermal management system 10 cools a power supply (e.g., a battery) of the electric vehicle and to cool the cabin of the electric vehicle.

The thermal management system 10 includes a heat exchanger 14, a chiller 18, a cabin evaporator 22, a compressor 26, a condenser 30, a first expansion valve 62, and a second expansion valve 66. In some embodiments, the thermal management system 10 may include more elements. In some embodiments, the thermal management system 10 may contain less elements.

The elements of the thermal management system 10 are connected by lines 34. A fluid (e.g., a refrigerant) flows through the thermal management system 10 through the lines 34. As the fluid flows through the thermal management system 10, it changes between a cool low-pressure state and a warm high-pressure state.

For simplicity, when the fluid is in the low-pressure state, it will be referred to as a "low-pressure fluid," and when the fluid is in the high-pressure state, it will be referred to as a "high-pressure fluid." In the illustrated embodiment, the low-pressure fluid is the same fluid as the high-pressure fluid, but the fluid is just in a different state. In some embodiments, the high-pressure fluid may be a different fluid than the low-pressure fluid.

The lines 34 include a first low-pressure line 38 (e.g., a low-pressure inlet line), a second low-pressure line 42 (e.g., a low-pressure inlet line), a third low-pressure line 46 (e.g., a low-pressure outlet line), a first high-pressure line 50 (e.g., a high-pressure inlet line), and a second high-pressure line 54 (e.g., a high-pressure outlet line). The first low-pressure line 38 provides fluid communication between the chiller 18 and the heat exchanger 14. The second low-pressure line 42 provides fluid communication between the cabin evaporator 22 and the heat exchanger 14. The third low-pressure line 46 provides fluid communication between the heat exchanger 14 and the compressor 26. The third low-pressure line 46 may be a suction line. The first high-pressure line 50 provides fluid communication between the condenser 30 and the heat exchanger 14. The second high-pressure line 54 provides fluid communication between the heat exchanger 14 and the first and second expansion valves 62, 66. The second high-pressure line 54 may include a first branch 56 connected to the first expansion valve 62 and a second branch 58 connected to the second expansion valve 66.

The lines 34 additionally define a first low-pressure flow path FP1, a second low-pressure flow path FP2, and a high-pressure flow path FP3. As the fluid flows along the first low-pressure flow path FP1 and the second low-pressure flow path FP2, the fluid is in the low-pressure state. As the fluid flows along the high-pressure flow path FP3, the fluid is in the high-pressure state.

The first low-pressure flow path FP1 extends from the first expansion valve 62 to the compressor 26. The first low-pressure flow path FP1 extends through the first low-pressure line 38, the heat exchanger 14, and the third low-pressure line 46.

The second low-pressure flow path extends FP2 from the second expansion valve 66 to the compressor 26. The second low-pressure flow path FP2 extends through the second low-pressure line 42, the heat exchanger 14, and the third low-pressure line 46.

The high-pressure flow path extends FP3 from the compressor 26 to the first and second expansion valves 62, 66. The high-pressure flow path FP3 extends through the condenser 30, the first high-pressure line 50, the heat exchanger 14, and the second high-pressure line 54.

The components of the thermal management system 10 will be briefly described. The heat exchanger 14 transfers heat from the high-pressure fluid flowing along the high-pressure flow path FP3 and the low-pressure fluid flowing along the first low-pressure flow path FP1 and the second low-pressure flow path FP2. The chiller 18 uses the low-pressure fluid in the first flow path FP1 to cool a coolant. The coolant is used to cool the battery and power train of the vehicle. The cabin evaporator 22 uses the low-pressure fluid flowing in the second flow path FP2 to cool the cabin by cooling the air that flows into the cabin. The compressor 26 is used to change the fluid condition from a cold, low-pressure fluid to a hot, super-heated high-pressure fluid. The condenser 30 cools the super-heated fluid to a warm, high-pressure fluid. The condenser 30 may be a liquid and/or a cabin condenser that provides warm air to the cabin. The first and second expansion valves 62, 66 are used to change the high-pressure fluid to low-pressure fluid.

The thermal management system 10, may operate in a first mode, a second mode, and a third mode based on the outside temperature and the operating condition of the vehicle engine. In the first mode, the outside temperature may be warm, and the engine may be running such that the chiller 18 is used to cool the battery and the cabin evaporator 22 is used to cool the cabin. In a second mode, the outside temperature may be cool, and the engine may be running such that the chiller 18 is running to cool the battery, but the cabin evaporator 22 is not used. In the third mode, the outside temperature may be warm, and the engine may not be running such that the chiller 18 is not used, but the cabin evaporator 22 is used to cool the cabin. In the first mode, low-pressure fluid is able to flow along the first low-pressure flow path FP1 and flow along the second low-pressure flow path FP2. In the second mode, flow along the second low-pressure flow path FP2 is prevented and flow along the first low-pressure flow path FP1 is allowed. In the third mode, flow along the first low-pressure flow path FP1 is prevented and flow along the second low-pressure flow path FP2 is allowed.

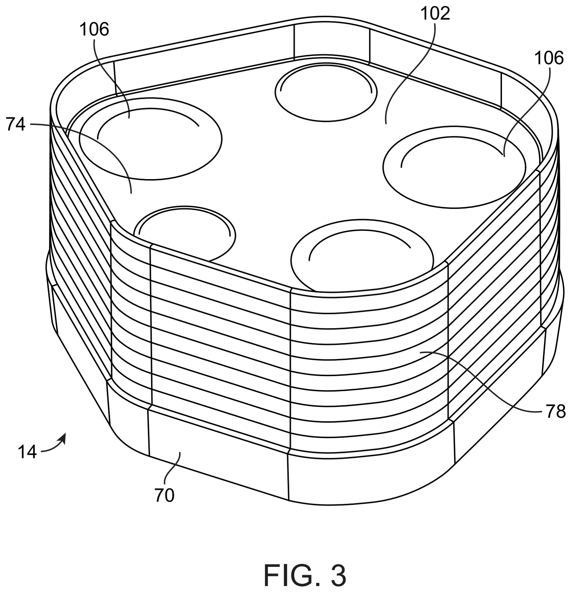

FIGS. 3-5 illustrate an embodiment of the heat exchanger 14 that can be used in the thermal management system 10. As mentioned above, the heat exchanger 14 transfers heat between the high-pressure fluid flowing along the high-pressure flow path FP3 as it flows through the heat exchanger 14 and the low-pressure fluid flowing along the first low-pressure flow path FP1 and second low-pressure flow path FP2 as the fluids flow through the heat exchanger 14. The heat exchanger 14 transfers heat from the high-pressure fluid to the low-pressure fluid in order to increase the efficiency of the thermal management system 10.

The heat exchanger 14 includes a first end 70 (e.g., a base end), a second end 74 (e.g., a top end), plates 78 stacked between the first end 70 and the second end 74. The heat exchanger 14 is a plate heat exchanger.

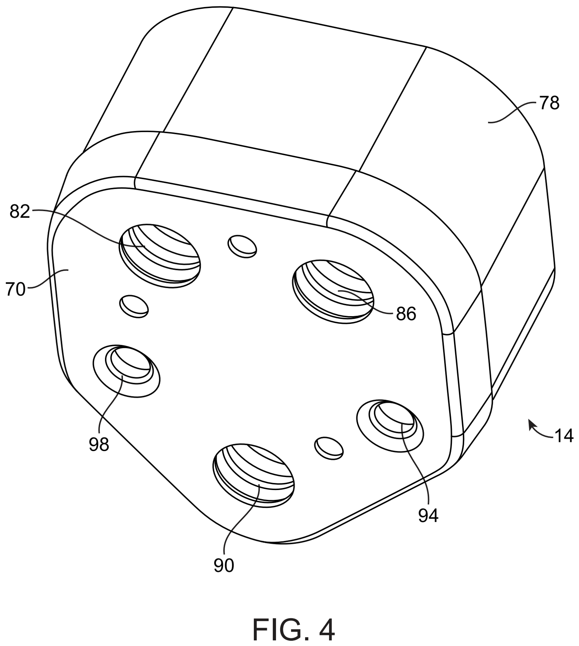

With reference to FIG. 4, the first end 70 of the heat exchanger 14 includes openings. The openings allow the fluid to enter the heat exchanger 14 and to exit the heat exchanger 14. The openings may include a first low-pressure inlet 82, a second low-pressure inlet 86, a low-pressure outlet 90, a high-pressure inlet 94, and a high-pressure outlet 98. In some embodiments, some of the openings (e.g., the low-pressure outlet and the high-pressure inlet) may be on the second end 74 of the heat exchanger 14. In some embodiments, the first low-pressure line 38 and the second low-pressure line 42 may be combined upstream of the heat exchanger 14 such that the heat exchanger 14 only includes one low-pressure inlet.

The first low-pressure inlet 82 connects to the first low-pressure line 38 to supply the low-pressure fluid to the first low-pressure inlet 82. The second low-pressure inlet 86 connects to the second low-pressure line 42 to supply the low-pressure fluid to the second low-pressure inlet 86. The low-pressure outlet 90 connects to the third low-pressure line 46 to supply the low-pressure fluid to the third low-pressure line 46. The low-pressure outlet 90 dispenses the low-pressure fluid from the heat exchanger 14 to the third low-pressure line 46. The high-pressure inlet 94 connects to the first high-pressure line 50 to supply the high-pressure fluid to the high-pressure inlet 94. The high-pressure outlet 98 connects to the second high-pressure line 54 to supply the high-pressure fluid the second high-pressure line 54. The high-pressure outlet 98 dispenses the high-pressure fluid to the second high-pressure line 54.

With reference to FIG. 3, the second end 74 of the heat exchanger 14 includes a cover 102. The cover 102 prevents the fluid from exiting the heat exchanger 14 at second end 74. The cover 102 may include dimples 106. The dimples 106 align with the openings on the first end 70.

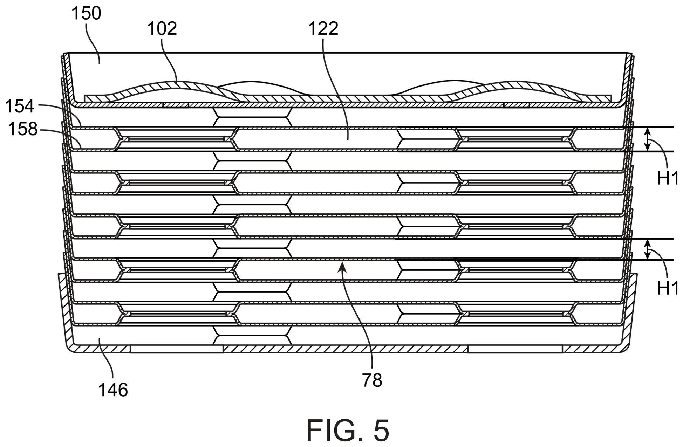

With reference to FIG. 5, the plates 78 allow the fluid to flow between adjacent plates. Adjacent plates (e.g., plates that are stacked between each other) form a space 122 between the adjacent plates. The fluid flows across the plates 78 in the space 122. The space 122 has a first height of H1. Adjacent plates are spaced a first height H1 apart. In some embodiments, some of the plates 78 are spaced a different height apart (e.g., are closer or further).

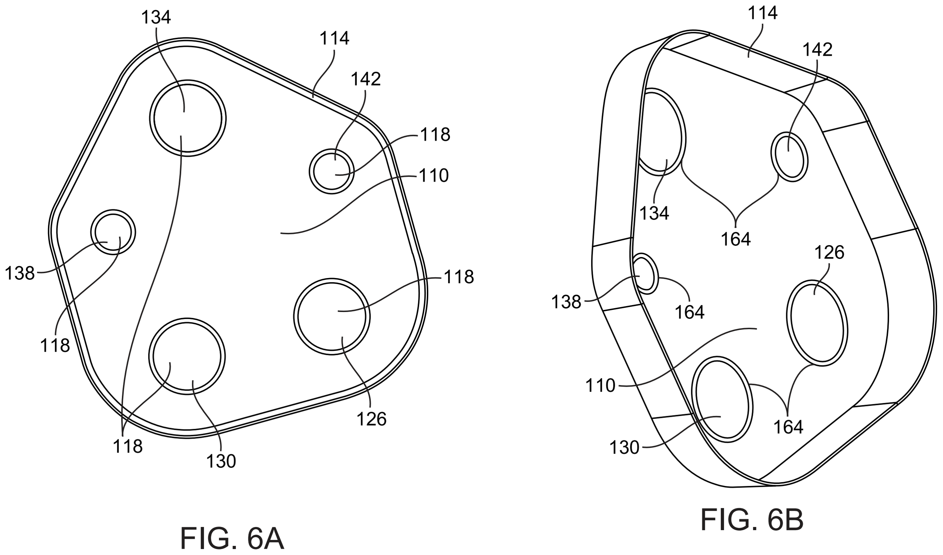

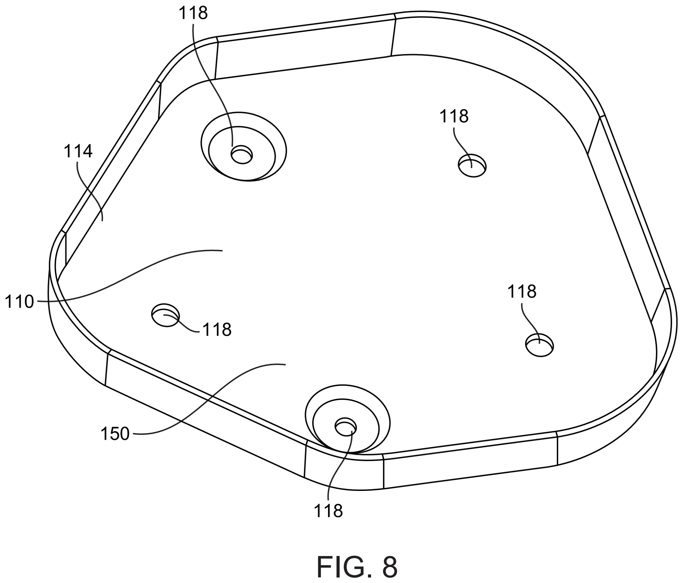

With refence to FIGS. 6A-11, each of the plates in the plates 78 includes a plate body 110 (e.g., a plate surface), a wall 114, and plate openings 118. In the illustrated embodiment, the plate body 110 is pentagon shaped and has five corners. In other embodiments, the plate body 110 may have a different shape (e.g., rectangular, triangular, circular).

The wall 114 extends along a perimeter of the plate body 110. In the illustrated embodiment, the wall 114 is angled. More specifically, the wall 114 extends upwards (e.g., towards the second end 74 of the heat exchanger 14) and outward (e.g., away from a center of plate body 110).

The plate openings 118 are disposed on the plate body 110. The plate openings 118 include a first low-pressure opening 126 (e.g., a low-pressure plate inlet), a second low-pressure opening 130 (e.g., a low-pressure plate inlet), a third low-pressure opening 134 (e.g., a low-pressure plate outlet), a first high-pressure opening 138 (e.g., a high-pressure plate inlet), and a second high-pressure opening 142 (e.g., a high-pressure plate outlet). The first low-pressure opening 126 is fluidly connected to the first low-pressure inlet 82. The second low-pressure opening 130 is fluidly connected to the second low-pressure inlet 86. The third low-pressure opening 134 is fluidly connected to the low-pressure outlet 90. The first high-pressure opening 138 is fluidly connected to the high-pressure inlet 94. The second high-pressure opening 142 is fluidly connected to the high-pressure outlet 98.

Each of the plate openings 118 may include a lip 164 that extends along the periphery of each of the plate openings 118. As explained in more detail below, the lip 164 may extend toward the first end 70 or toward the second end 74. The lip 164 can control the flow of fluid across the plate body 110.

One of the openings of the plate openings 118 is disposed adjacent every corner of the plate body 110. The plate openings 118 are arranged such that the high-pressure openings (e.g., first high-pressure opening 138 and the second high-pressure opening 142) are not adjacent to each other. The high-pressure openings are separated by a low-pressure opening (e.g., the first low-pressure opening 126, the second low-pressure opening 130, or the third low-pressure opening 134). The third low-pressure opening 134 is separated from the first low-pressure opening 126 and the second low-pressure opening 130 by one of the high-pressure openings. The first low-pressure opening 126 is adjacent the second low-pressure opening 130.

In the illustrated embodiment, the first low-pressure opening 126 is spaced from the third low-pressure opening 134 by a second distance of D2. The second low-pressure opening 130 is spaced from the third low-pressure opening 134 by a third distance of D3. The second distance D2 and the third distance D3 are larger than the first distance D1. The third distance D3 is the same as the second distance D2. In some embodiments, the third distance D3 is larger than the second distance D1.

The first high-pressure opening 138 is spaced from the second high-pressure opening 142 by a fourth distance of D4. The fourth distance D4 is larger than the first distance D1. The fourth distance D4 is smaller than the second distance D2 and the third distance D3. The fourth distance D4 may be 90% of the second distance D2. The fourth distance D4 may be 80% of the second distance D2. In some embodiments, the fourth distance D4 is the same as the second distance D2 and the third distance D3. In some embodiments, the fourth distance D4 is larger than the second distance D2 and the third distance D3.

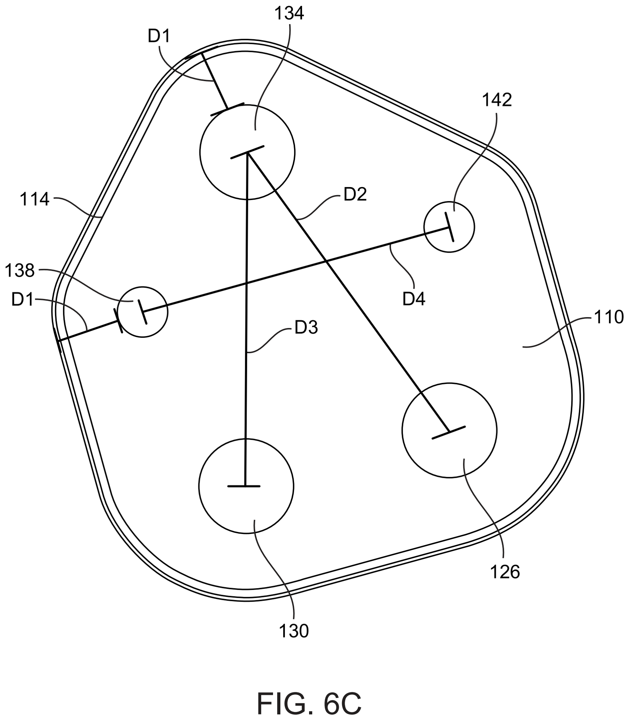

With reference to FIG. 6C, each of the openings in the plate openings 118 are spaced a first distance of D1 from the wall 114 or the perimeter of the plate body 110. The first distance D1 is measured from the edge of the opening closest to the wall 114 to the wall 114. In some embodiments, some of the openings may be spaced a distance further than the first distance D1 from the wall 114.

With reference to FIG. 5, the plates 78 may include a base plate 146, an end plate 150, a group of first plates 154, and a group of second plates 158. The plates 78 are arranged such that the base plate 146 is disposed on the first end 70 of the heat exchanger 14 and the end plate 150 is disposed on the second end 74 of the heat exchanger 14. The group of first plates 154 and the group of second plates 158 are stacked between the base plate 146 and the end plate 150. The group of first plates 154 are alternatingly stacked with the group of second plates 158 such that one of the first plates 154 is adjacent to one of the second plates 158.

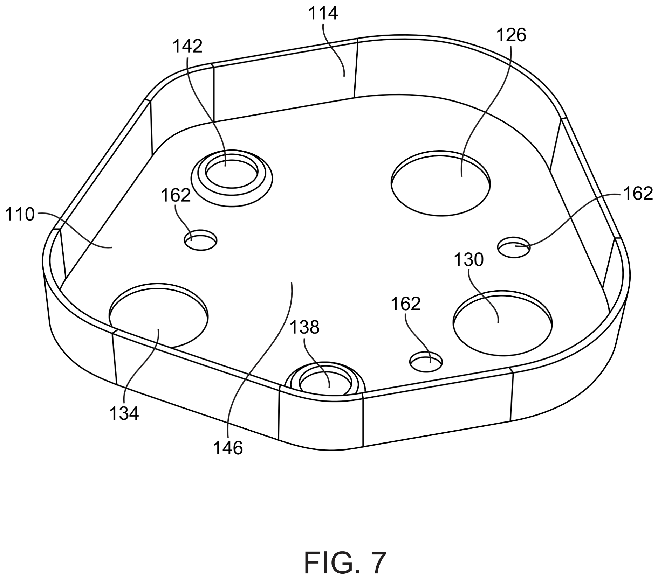

With reference to FIG. 7, the base plate 146 is situated adjacent the first end 70 of the heat exchanger 14. In some embodiments, the base plate 146 defines the first end 70 of the heat exchanger 14 such that the first low-pressure opening 126 defines the first low-pressure inlet 82, the second low-pressure opening 130 defines the second low-pressure inlet 86, the third low-pressure opening 134 defines the low-pressure outlet 90, the first high-pressure opening 138 defines the high-pressure inlet 94, and the second high-pressure opening 142 defines the high-pressure outlet 98. The base plate 146 may prevent fluid flow across the plate body 110.

The base plate 146 may include positioning feature locations 162. The positioning feature locations 162 receive a counter positioning feature that allow the heat exchanger 14 to be coupled to another element in the system or to a mounting plate.

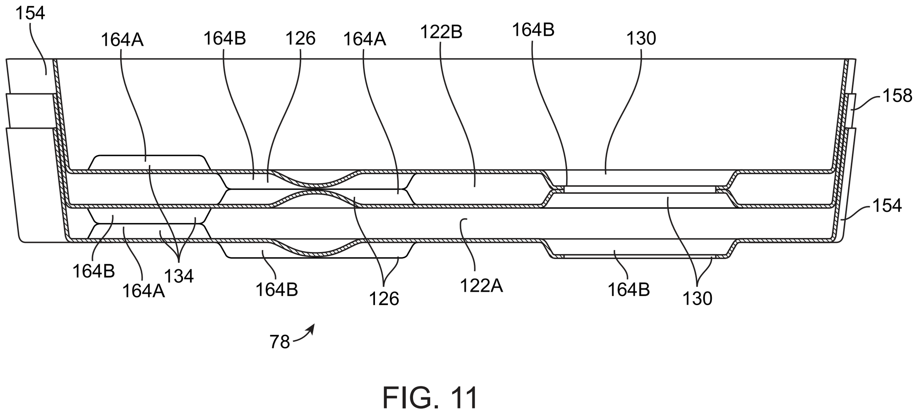

With reference to FIG. 11, the first plates 154 and the second plates 158 are alternatingly stacked such that the high-pressure fluid flows adjacent to the low-pressure fluid and that the high-pressure fluid can transfer heat to the low-pressure fluid. The low-pressure fluid may be in cross flow, counter flow, or parallel flow with the high-pressure fluid.

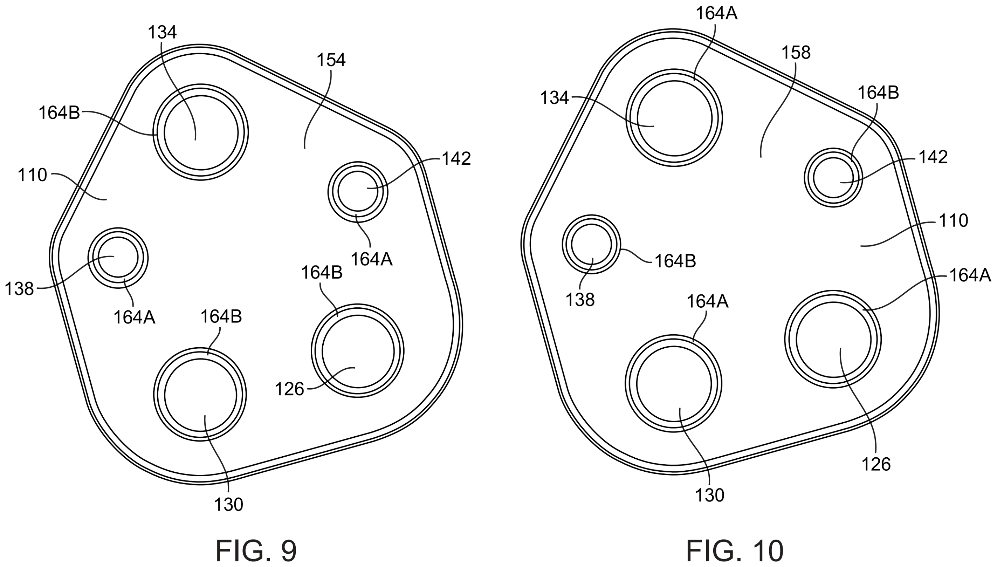

With reference to FIG. 9, on the first plates 154, the high-pressure openings (e.g., the first high-pressure opening 138 and the second high-pressure opening 142) have a first lip 164A. The first lip 164A extends upward toward the second end 74 of the heat exchanger 14. On the first plates 154, the low-pressure openings (e.g., the first low-pressure opening 126, the second low-pressure opening 130, and the third low-pressure opening 134) have a second lip 164B. The second lip 164B extends downward toward the first end 70 of the heat exchanger 14.

With reference to FIG. 10, on the second plates 158, the low-pressure openings have the first lip 164A that extends upward, and high-pressure openings have the second lip 164B that extends downward.

The lips 164 between adjacent plates provide or inhibit fluid communication between some of the plate openings 118. For example, when a first plate 154 is stacked below a second plate 158, the second lip 164B around the low-pressure openings of the first plate 154 does not engage with and is spaced from the first lip 164A around the low-pressure openings of the second plate 158 such that the low-pressure fluid is able to flow across the plate body 110 of the first plate 154. Additionally, the first lip 164A around the high-pressure openings of the first plate 154 engage (e.g., touch) with the second lip 164B around the high-pressure openings of the second plate 158 to form a seal. The seal prevents the high-pressure fluid from flowing across the plate body 110 of the first plate 154.

A first space 122A (e.g., a channel, a passage, etc.) is formed between one of the first plates 154 and one of the second plates 158 when one of the first plates 154 is positioned below one of the second plates 158. The first space 122A allows the low-pressure fluid to flow across the plate body 110 of the first plate 154 and prevents the high-pressure fluid from flowing across the plate body 110 of the first plate 154. More specifically, the first space 122A provides fluid communication between the first low-pressure opening 126 and the third low-pressure opening 134, provides fluid communication between the second low-pressure opening 130 and the third low-pressure opening 134, and inhibits fluid communication between the first high-pressure opening 138 and the second high-pressure opening 142.

A second space 122B (e.g., a channel, a passage, etc.) is formed between one of the first plates 154 and one of the second plates 158 when one of the second plates 158 is positioned below one of the first plates 154. The second space 122B allows high-pressure fluid to flow across the plate body 110 of the second plate 158 and prevent low-pressure fluid from flowing across the plate body 110 of the second plate 158. More specifically, the second space 122B provides fluid communication between the first high-pressure opening 138 and the second high-pressure opening 142, inhibits fluid communication between first low-pressure opening 126 and the third low-pressure opening 134, and inhibits fluid communication between the second low-pressure opening 130 and the third low-pressure opening 134.

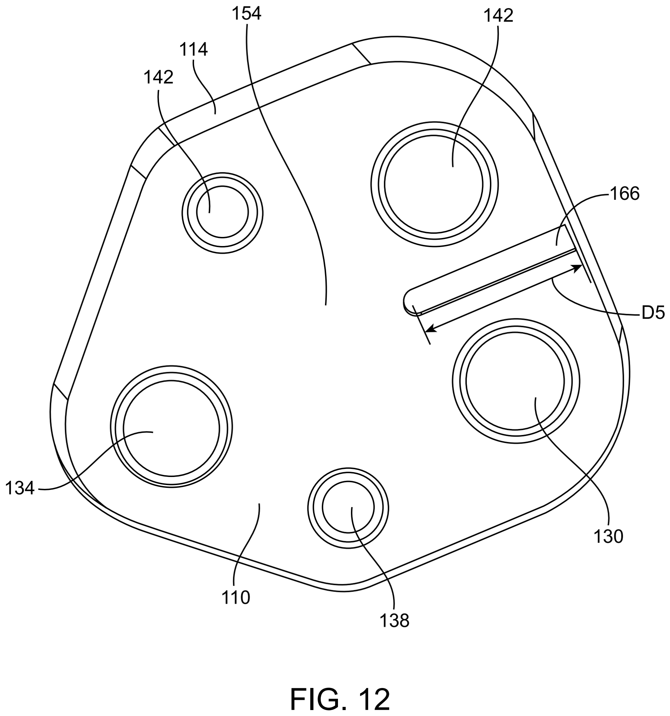

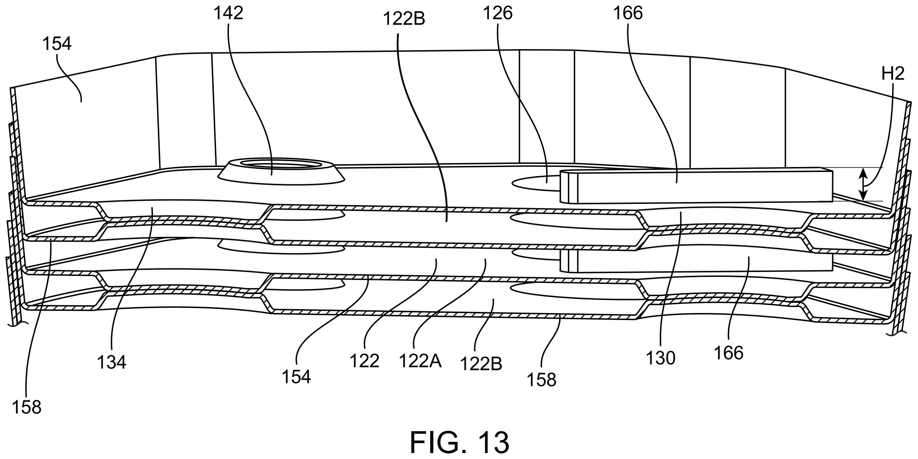

With reference to FIGS. 12 and 13, first type of plate 154 may include a wall 166. The wall 166 extends partially along the plate body 110. The wall 166 is positioned between the first low-pressure opening 126 and the second low-pressure opening 130. The wall 166 at least partially inhibits fluid communication between the first low-pressure opening 126 and the second low-pressure opening 130. More specifically, the wall 166 inhibits direct fluid communication between the low-pressure opening 126 and the second low-pressure opening 130.

The wall 166 directs the low-pressure fluid from the first and second low-pressure openings 126, 130 to the third low-pressure opening 134. The wall 166 may consist of a separate part coupled to the plates 78, may be integrally formed with the plates 78, or may be formed into the turbulator (discussed in detail below) disposed on the plates 78. The wall 166 prevents the liquid low-pressure fluid from accumulating in the second low-pressure opening 130 when the thermal management system 10 is operating in the second mode (e.g., when the chiller 18 is running and the cabin evaporator 22 is off). The wall 166 prevents the liquid low-pressure fluid from accumulating in the first low-pressure opening 126 when the thermal management system 10 is operating in the third mode (e.g., when the cabin evaporator 22 is running and the chiller 18 is off).

The wall 166 may have a height of H2 and a length of D5. The height H2 may be the same as the height H1 of the space 122. The height H2 may be less than the height H1. The length D5 may be less than the distance D2 between the first low-pressure opening 126 and the third low-pressure opening 134. The length D5 may be less than the distance D3 between the second low-pressure opening 130 and the third low-pressure opening 134. The length D5 may be less than three-quarters of the distance D2 and D3. The length D5 may be less than half of the distance D2 or the distance D3. The length D5 may be a less than a third of the distance D2 or the distance D3. The length D5 may be a fourth of the distance D2 or the distance D3.

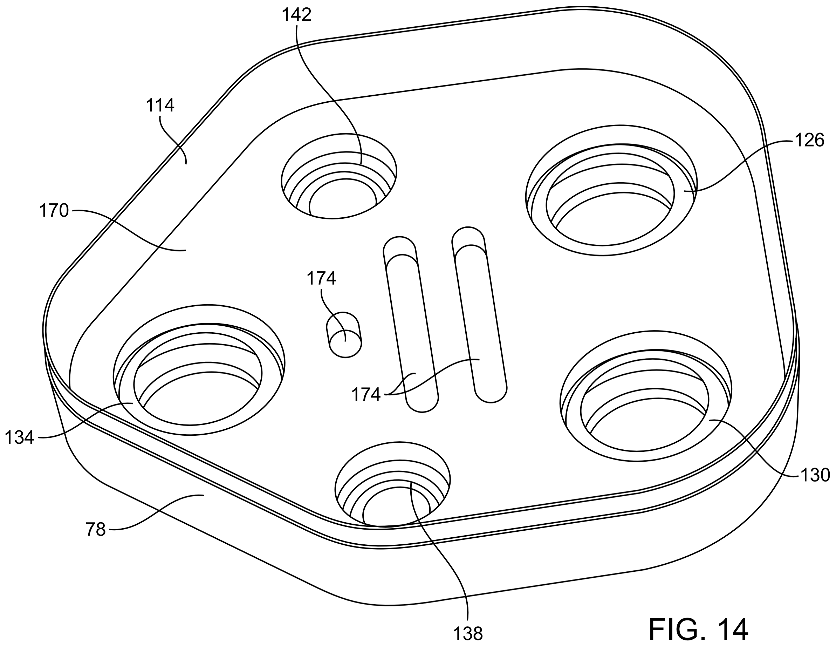

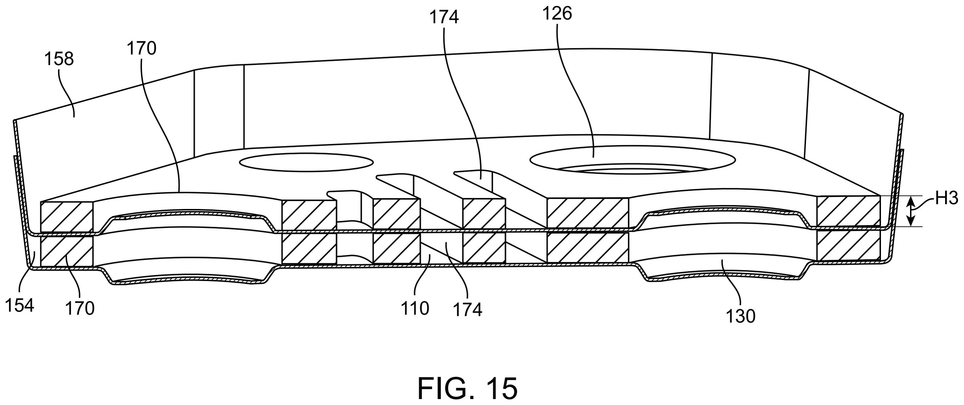

With reference to FIGS. 14-15, some of the plates in the plates 78 may include a turbulator 170 disposed on the plate body 110. The turbulator 170 extends partially across the plate body 110. The turbulator 170 may be made from a porous body that allows fluid to flow through the turbulator 170. The turbulator 170 increases the turbulence of the fluid as it flows across the turbulator 170 and the plate body 110. Increasing the turbulence of the fluid, increases the amount of heat transfer between the low-pressure fluids and the high-pressure fluid. In some embodiments, a turbulator 170 is disposed on every plate in the plates 78. In some embodiments, a turbulator 170 is disposed on only the first type of plates 154 or the second type of plates 158. In some embodiments, a turbulator 170 is disposed only on the first type of plates 154 and the second type of plates 158. In some embodiments, the turbulator 170 extends across the entire plate body 110.

The turbulator 170 may have a height of H3. The height H3 may be the same as the height H1 of the space 122. The height H3 may be less than the height H1. The height H1 may be the same as the height H2 of the wall 166. The height H1 may be more than the height H2.

The turbulator 170 may include a channel 174. The channel 174 extends partly across the turbulator 170. The channel 174 exposes part of the plate body 110. The channel 174 allows the fluid to distribute in a transversal direction to the main flow direction, reducing frictional pressure losses of the low-pressure fluid flowing from an inlet to an outlet. In the illustrated embodiment, the turbulator 170 includes three channels 174. In some embodiments, the turbulator 170 may include more channels 174.

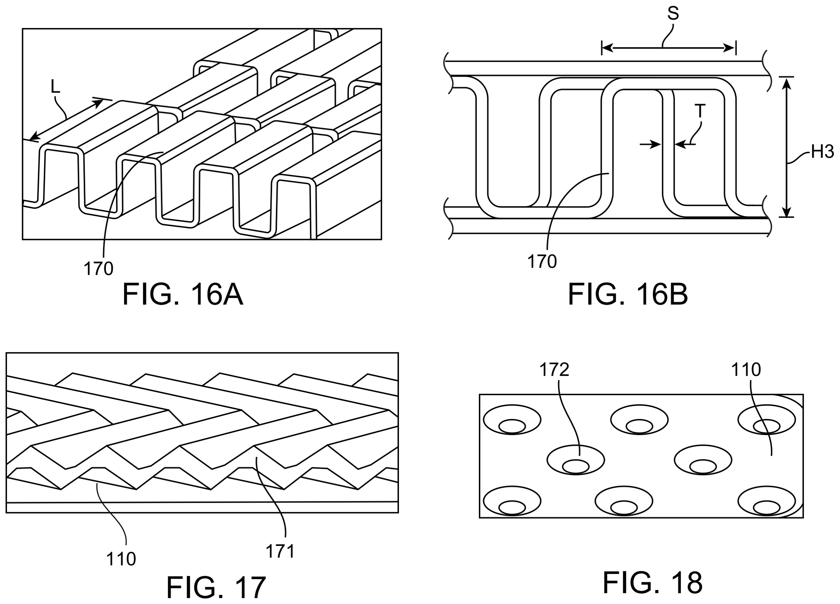

Turning to FIGS. 16A and 16B, the turbulator 170 may be a lanced offset turbulator that includes fins. The fins have a rectangular shape. More specifically, the fins have a length of L, a fin width of S (e.g., a fin pitch), a thickness of T, and a height H3. The length L is less than the fin width S. In some embodiments, the length L is larger than the fin width S.

In embodiments where the length L is less than the fin width S, the distance D1 between the plate openings 118 and the wall 114 is greater than the fin width S. In some embodiments, the distance S is greater than 1.5 times the fin width S. In some embodiments, the distance D1 is at least twice the fin width S. In some embodiments, the distance D1 is no more than three times the fin width S. In some embodiments, the distance D1 is two times the fin width S of the fins.

Turning to FIG. 17, the plates 78 may include a chevron pattern 171 formed on the plate body 110 instead of a turbulator 170. More specifically, the plate body 110 includes ridges that extend in different directions to form the chevron pattern 171. The chevron pattern 171 increases the turbulence of the fluid flowing across the plate body 110. In some embodiments, both the first plates 154 and the second plates 158 may include the chevron pattern 171 on the plate body 110. In some embodiments, the first plates 154 may include a plate body 110 having a chevron pattern 171 and the second plates 158 have a turbulator 170 disposed on the plate body 110. In some embodiments, the second plates 158 may include a plate body 110 having a chevron pattern 171 and the first plates 154 have a turbulator 170 disposed on the plate body 110.

Turning to FIG. 18, the plates 78 may include a dimpled pattern 172 formed on the plate body 110 instead of a turbulator 170. The dimpled pattern 172 increases the turbulence of the fluid flowing across the plate body 110. In some embodiments, the first plates 154 may include a plate body 110 having a dimpled pattern 172 and the second plates 158 have a turbulator 170 disposed on the plate body 110. In some embodiments, the second plates 158 may include a plate body 110 having a dimpled pattern 172 and the first plates 154 have a turbulator 170 disposed on the plate body 110. In some embodiments, both the first plates 154 and the second plates 158 may include the dimpled pattern 172 on the plate body 110.

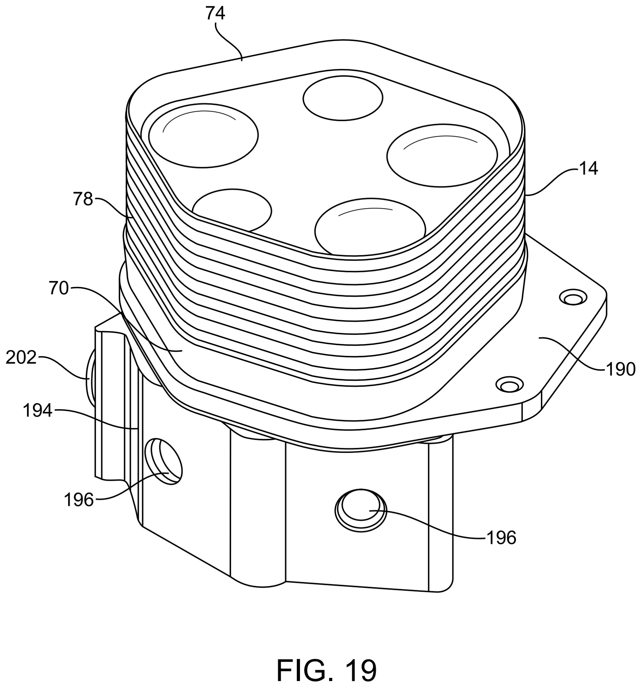

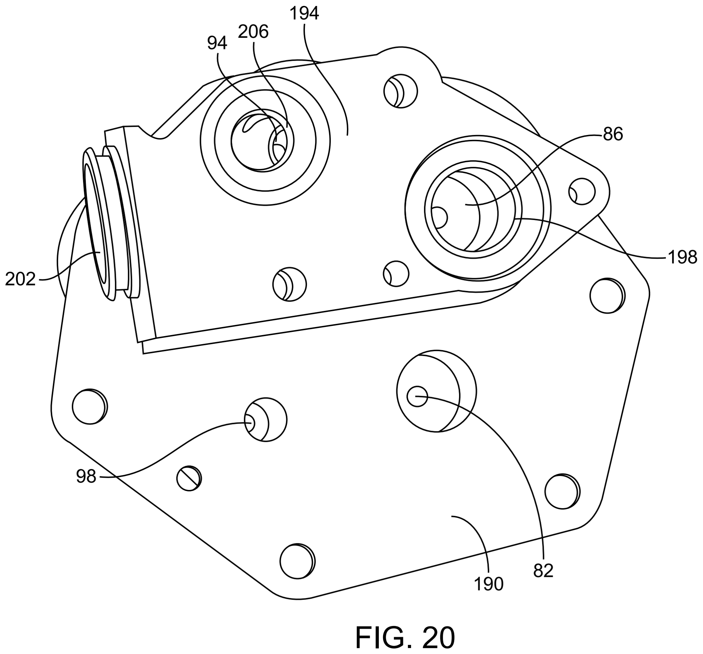

With reference to FIGS. 19 and 20, the heat exchanger 14 may be coupled to a mounting plate 190. More specifically, the first end 70 of the heat exchanger 14 is coupled to the mounting plate 190. The mounting plate 190 allows the heat exchanger 14 to be coupled to different elements. The mounting plate 190 includes openings that align with the openings of the heat exchanger 14. The heat exchanger 14 may be removably coupled to the mounting plate 190 with fasteners. In some embodiments, the heat exchanger 14 is brazed to the mounting plate 190.

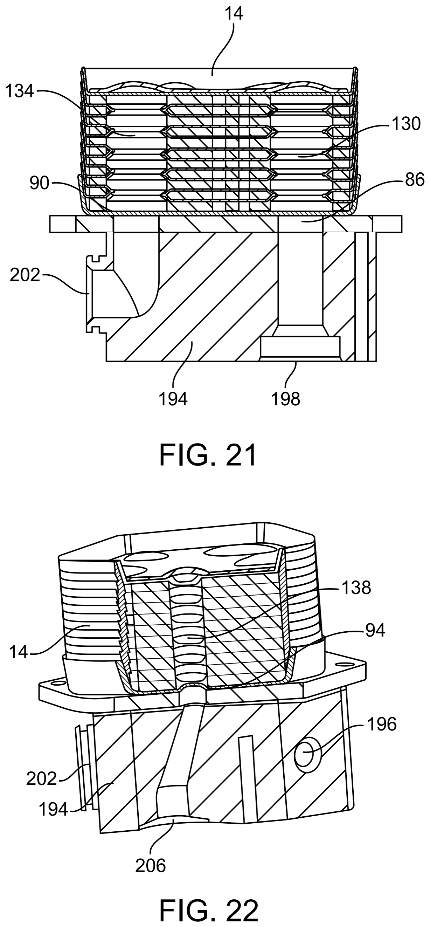

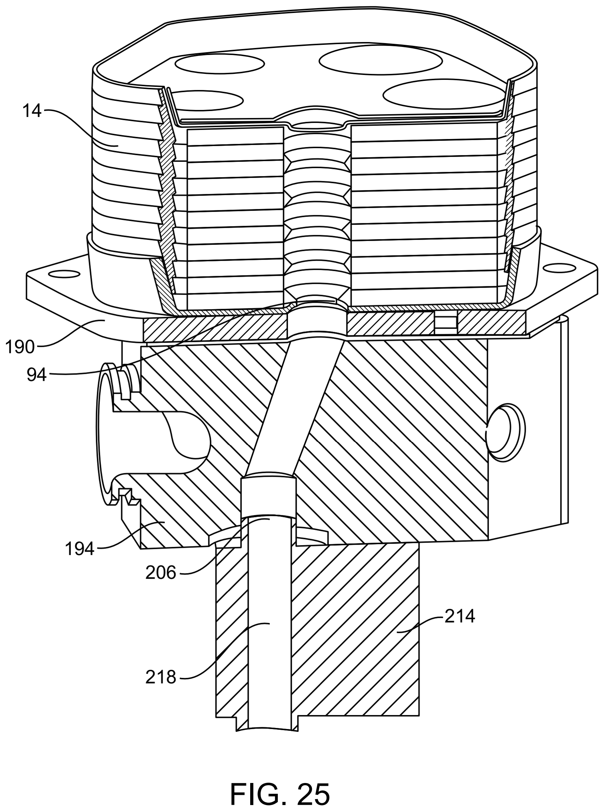

With reference to FIGS. 19-25, a valve block 194 may be coupled to the mounting plate 190 such that the heat exchanger 14 is in fluid communication with the valve block 194. The valve block 194 includes a first low-pressure passage 198, a second low-pressure passage 202, and a high-pressure passage 206. The first low-pressure passage 198 is in fluid communication with the second low-pressure inlet 86 and connects to the second low-pressure line 42. The first low-pressure passage 198 supplies the low-pressure fluid from the second low-pressure line 42 to the heat exchanger 14. The second low-pressure passage 202 is in fluid communication with the low-pressure outlet 90 and connects to the third low-pressure line 46. The second low-pressure passage 202 dispenses the low-pressure fluid from the heat exchanger 14 to the third low-pressure line 46. The high-pressure valve passage 206 is in fluid communication with the high-pressure inlet 94 and connects to the first high-pressure line 50. The high-pressure valve passage 206 supplies the high-pressure fluid to the heat exchanger 14.

The valve block 194 may include mounting holes 196. The mounting holes 196 support a sensor 210. The sensor 210 may be a temperature sensor, a pressure sensor, or a pressure-temperature sensor. The heat exchanger 14 may include a first sensor 210A in fluid communication with the third low-pressure line 46 such that the first sensor 210A measures the low-pressure fluid as it flows along the third low-pressure line 46. The heat exchanger 14 may include a second sensor 210B in fluid communication with the first high-pressure line 50 such that the second sensor 210B measures the high-pressure fluid as it flows along the first high-pressure line 50.

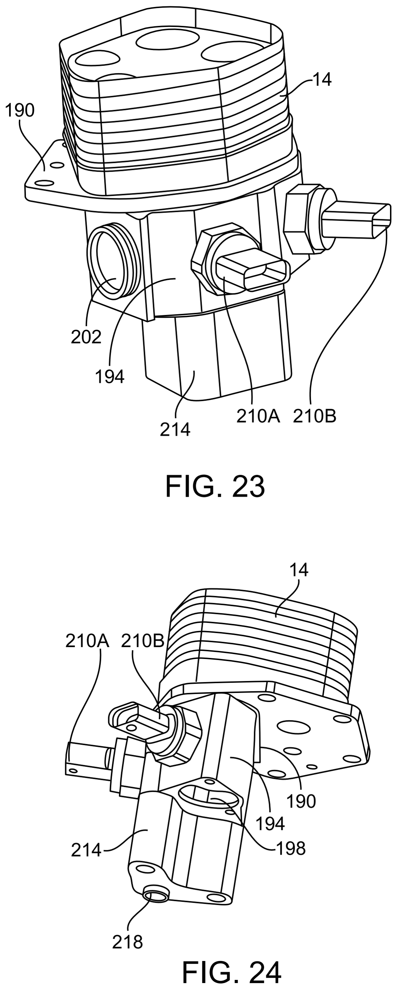

With reference to FIGS 23-25, the heat exchanger 14 may include a second valve block 214 coupled to the valve block 194. The second valve block 214 is in fluid communication with the valve block 194 and the heat exchanger 14. More specifically, the second valve block 214 is in fluid communication with the first high-pressure line 50. The second valve block 214 includes a high-pressure valve passage 218. The high-pressure valve passage 218 is in fluid communication with the high-pressure valve passage 206 of the valve block 194 and the high-pressure inlet 94 of the heat exchanger 14. The high-pressure valve passage 218 supplies the high-pressure fluid to the heat exchanger 14, and more specifically, to the high-pressure inlet 94 of the heat exchanger 14.

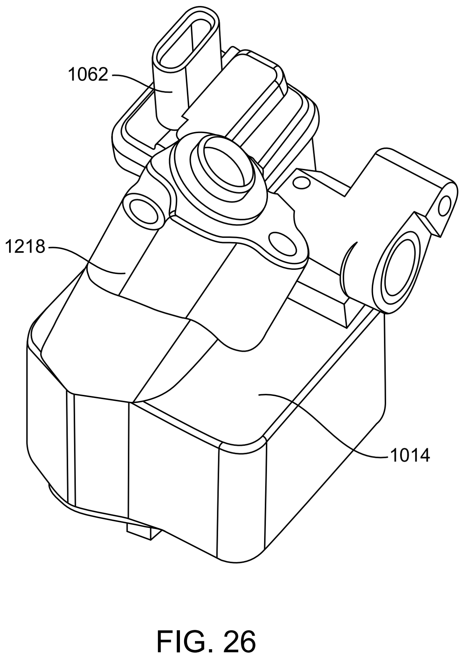

FIG. 26 illustrates another embodiment of a heat exchanger 1014. Many features of the heat exchanger 1014 are similar to those discussed above with regard to the first embodiment of the heat exchanger 14. As such, many of these features will not be discussed again below. Features similar to those discussed above will be labeled with a reference number that is a value of one thousand higher than the corresponding feature discussed above.

The heat exchanger 1014 includes a check valve 1218 mounted onto the heat exchanger 1014. The check valve 1218 is fluidly connected to the second low-pressure inlet (e.g., the low-pressure inlet fluidly connected to cabin evaporator). The check valve 1218 prevents the low-pressure fluid from flowing back towards the cabin evaporator when the cabin evaporator is not in use. The check valve 1218 also prevents an accumulation of low-pressure fluid in the line when the cabin evaporator is not in use. A valve block may fluidly connect the second low-pressure inlet to the check valve 1218. In some embodiments, the heat exchanger 1014 may include a second check valve (not shown) that is fluidly connected to the chiller and the first low-pressure inlet.

The heat exchanger 1014 further includes an expansion valve 1062 mounted to the heat exchanger 1014. The expansion valve 1062 is fluidly connected to a high-pressure outlet of the heat exchanger 1014. In some embodiments, there may be a valve block that fluidly connects the high-pressure outlet and the expansion valve 1062. In some embodiments, the heat exchanger 1014 may include a second expansion valve.

In the illustrated embodiment, the expansion valve 1062 is adjacent to the check valve 1218. In some embodiments, the expansion valve 1062 may be on a first end (e.g., the base) of the heat exchanger 1014 and the check valve 1218 may be on the second end (e.g., the top end) of the heat exchanger. For example, the heat exchanger 1014 may be arranged such that the second low-pressure inlet is disposed on the second end of the heat exchanger 1014, while the high-pressure outlet is disposed on the first end of the heat exchanger 1014.

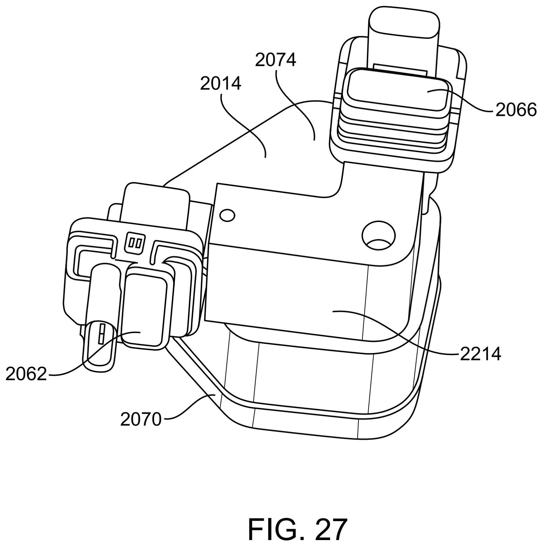

FIG. 27 illustrates another embodiment of a heat exchanger 2014. Many features of the heat exchanger 2014 are similar to those discussed above with regard to the first embodiment of the heat exchanger 14. As such, many of these features will not be discussed again below. Features similar to those discussed above will be labeled with a reference number that is a value of two thousand higher than the corresponding feature discussed above.

The heat exchanger 2014 includes a first end 2070 (e.g., a base) and a second end 2074 (e.g., a top end). Unlike the heat exchanger 14 where all the openings are situated on the first end 70, the heat exchanger 2014 has the openings disposed on both the first end 2070 and the second end 2074. More specifically, the second low-pressure inlet (e.g., the low-pressure inlet fluidly connected to cabin evaporator), the low-pressure outlet, and the high-pressure inlet are disposed on the first end 2070 of the heat exchanger 2014, while the first low-pressure inlet (e.g., the low-pressure inlet fluidly connected to the chiller) and the high-pressure outlet are disposed on the second end 2074 of the heat exchanger 2014.

The heat exchanger 2014 further includes a valve block 2214 disposed on the second end 2074 of the heat exchanger 2014. The valve block 2214 supports a first expansion valve 2062 (e.g., an electronic expansion valve) and a second expansion valve 2066 (e.g., an electronic expansion valve). The valve block 2214 fluidly connects the high-pressure outlet to the first expansion valve 2062 and the second expansion valve 2066. The first expansion valve 2062 fluidly connects to a chiller. The second expansion valve 2066 fluidly connects to a cabin evaporator. In some embodiments, the heat exchanger 2014 may only include one expansion valve 2062. In these embodiments, the first expansion valve 2062 fluidly connects to the chiller, and the cabin evaporator is controlled by an expansion valve directly at its inlet.

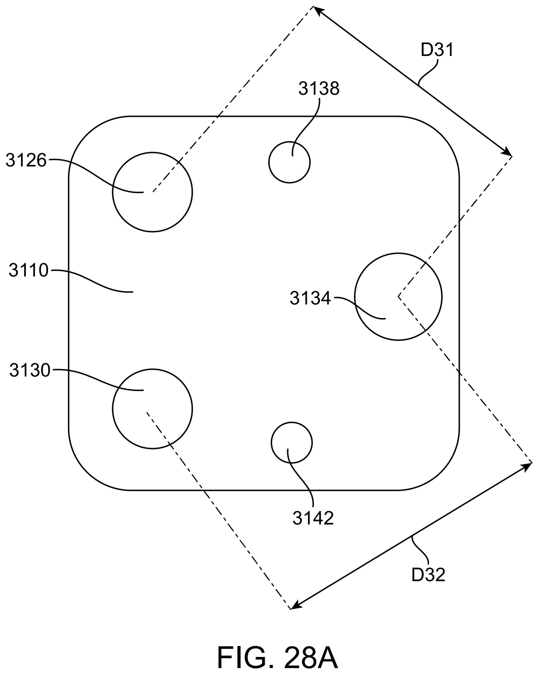

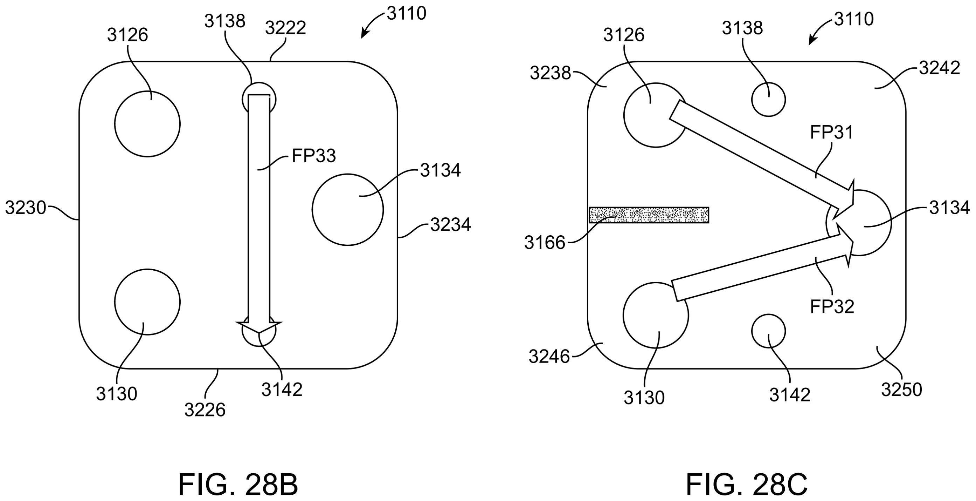

FIGS. 28A-28C illustrate another embodiment of a plate body 3110. Many features of the plate body 3110 are similar to those discussed above with regard to the first embodiment of the plate body 110 (FIGS. 6A-6C). As such, many of these features will not be discussed again below. Features similar to those discussed above will be labeled with a reference number that is a value of three thousand higher than the corresponding feature discussed above.

The plate body 3110 may have a rectangular shape. More specifically, the plate body 3110 may have a square shape. The plate body 3110 includes a first side 3222, a second side 3226 opposite the first side 3222, a first end 3230, and a second end 3234 opposite the first end 3230. The plate body 3110 further includes a first corner 3238 connecting the first side 3222 and the first end 3230, a second corner 3242 connecting the first side 3222 and the second end 3234, a third corner 3246 connecting the first end 3230 and the second side 3226, and a fourth corner 3250 connecting the second side 3226 and the second end 3234.

The plate body 3110 includes a first low-pressure opening 3126 (e.g., a low-pressure plate inlet), a second low-pressure opening 3130 (e.g., a low-pressure plate inlet), a third low-pressure opening 3134 (e.g., a low-pressure plate outlet), a first high-pressure opening 3138 (e.g., a high-pressure plate inlet), and a second high-pressure opening 3142 (e.g., a high-pressure plate outlet). The first low-pressure opening 3126 is disposed adjacent the first corner 3238. The second low-pressure opening 3130 is disposed adjacent the third corner 3246. The third low-pressure opening 3134 is disposed along the second end 3234. The first high-pressure opening 3138 is disposed along the first side 3222. The second high-pressure opening 3142 is disposed along the second side 3226.

The first low-pressure opening 3126 is located a first distance D31 from the third low-pressure opening 3134. The second low-pressure opening 3130 is located a second distance D32 from the third low-pressure opening 3134. The second distance D32 is the same as the first distance D31.

On the plate body 3110, a first low-pressure fluid path FP31 extends in a first direction across the plate body 3110 from the first low-pressure opening 3126 to the third low-pressure opening 3134. A second low-pressure fluid path FP32 extends in a second direction across the plate body 3110 from the second low-pressure opening 3130 and the third low-pressure opening 3134. A first high-pressure fluid path FP33 extends in a third direction across the plate body 3110 from the first high-pressure opening 3138 to the second high-pressure opening 3142 or vice versa. The first low-pressure fluid path FP31 and the second low-pressure fluid path FP32 are transverse to the high-pressure fluid path FP33.

In some instances (e.g., when the plate body 3110 permits flow from the first and second low-pressure openings 3126, 3130 to the third low-pressure opening 3134 and inhibit flow from the first high-pressure opening 3138 and the second high-pressure opening 3142), the plate body 3110 may include a wall 3166. The wall 3166 is positioned between the first low-pressure opening 3126 and the second low-pressure opening 3130. The wall 3166 generally extends transverse to the first low-pressure flow path FP31 and the second low-pressure flow path FP32.

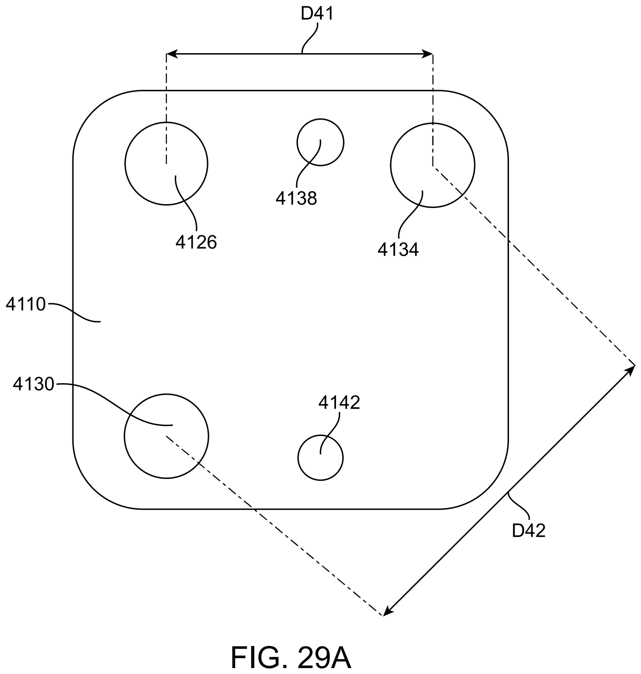

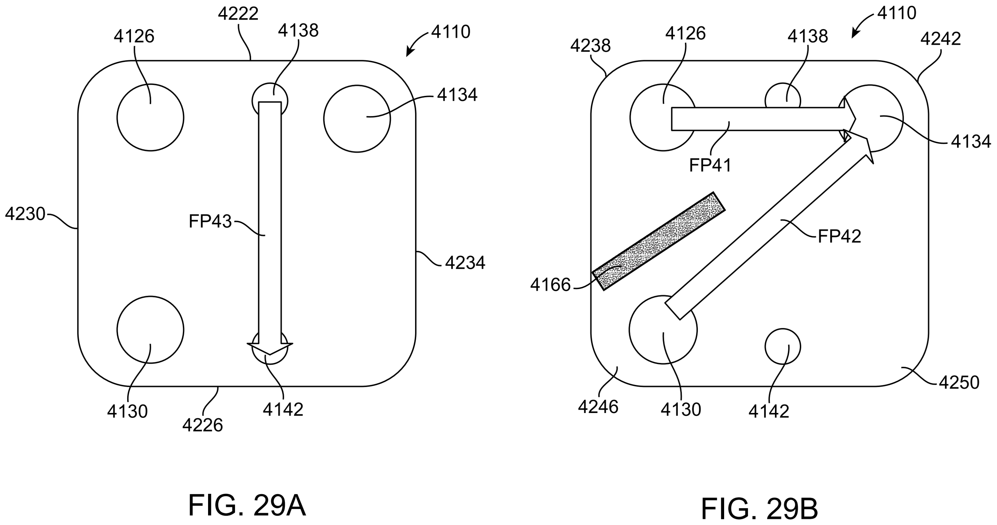

FIGS. 29A-29C illustrate another embodiment of a plate body 4110. Many features of the plate body 4110 are similar to those discussed above with regard to the fourth embodiment of the plate body 3110. As such, many of these features will not be discussed again below. Features similar to those discussed above will be labeled with a reference number that is a value of one thousand higher than the corresponding feature discussed above.

The plate body 4110 may have a rectangular shape. More specifically, the plate body 4110 can have a square shape. The plate body 4110 includes a first side 4222, a second side 4226 opposite the first side 4222, a first end 4230, and a second end 4234 opposite the first end 4230. The plate body 4110 further includes a first corner 4238 connecting the first side 4222 and the first end 4230, a second corner 4242 connecting the first side 4222 and the second end 4234, a third corner 4246 connecting the first end 4230 and the second side 4226, and a fourth corner 4250 connecting the second side 4226 and the second end 4234.

The plate body 4110 includes a first low-pressure opening 4126 (e.g., a low-pressure plate inlet), a second low-pressure opening 4130 (e.g., a low-pressure plate inlet), a third low-pressure opening 4134 (e.g., a low-pressure plate outlet), a first high-pressure opening 4138 (e.g., a high-pressure plate inlet), and a second high-pressure opening 4142 (e.g., a high-pressure plate outlet). The first low-pressure opening 4126 is disposed adjacent the first corner 4238. The second low-pressure opening 4130 is disposed adjacent the third corner 4246. The third low-pressure opening 4134 is disposed adjacent the second corner 4242. The first high-pressure opening 4138 is disposed along the first side 4222. The second high-pressure opening 4142 is disposed along the second side 4226.

The first low-pressure opening 4126 is located a first distance D41 from the third low-pressure opening 4134. The second low-pressure opening 4130 is located a second distance D42 from the third low-pressure opening 4134. The second distance D42 is larger than the first distance D41. The second distance D42 may be less than two times larger than the first distance D41. More specifically, the second distance D42 is 1.6 times larger than the first distance D41.

On the plate body 4110, a first low-pressure fluid path FP41 extends in a first direction across the plate body 4110 from the first low-pressure opening 4126 to the third low-pressure opening 4134. A second low-pressure fluid path FP42 extends in a second direction across the plate body 4110 from the second low-pressure opening 4130 and the third low-pressure opening 4134. A first high-pressure fluid path FP43 extends in a third direction across the plate body 4110 from the first high-pressure opening 4138 to the second high-pressure opening 4142 or vice versa. The first low-pressure fluid path FP41 is transverse to the second low-pressure fluid path FP42 and the high-pressure fluid path FP43. More specifically, the first low-pressure fluid path FP41 is transverse to the second low-pressure fluid path FP42 and is perpendicular to the high-pressure fluid path FP43. The first low-pressure fluid path FP41 is arranged in cross flow with the high-pressure fluid path FP43. The second low-pressure fluid path FP42 is transverse to the high-pressure fluid path FP43 such that the second low-pressure fluid path FP42 and the high-pressure fluid path FP43 are arranged in a transverse flow.

In some instances (e.g., when the plate body 4110 permits flow from the first and second low-pressure openings 4126, 4130 to the third low-pressure opening 4134 and prevent flow from the first high-pressure opening 4138 and the second high-pressure opening 4142), the plate body 4110 may include a wall 4166. The wall 4166 is positioned between the first low-pressure opening 4126 and the second low-pressure opening 4130. The wall 4166 generally extends in the same direction as the second low-pressure flow path FP42.

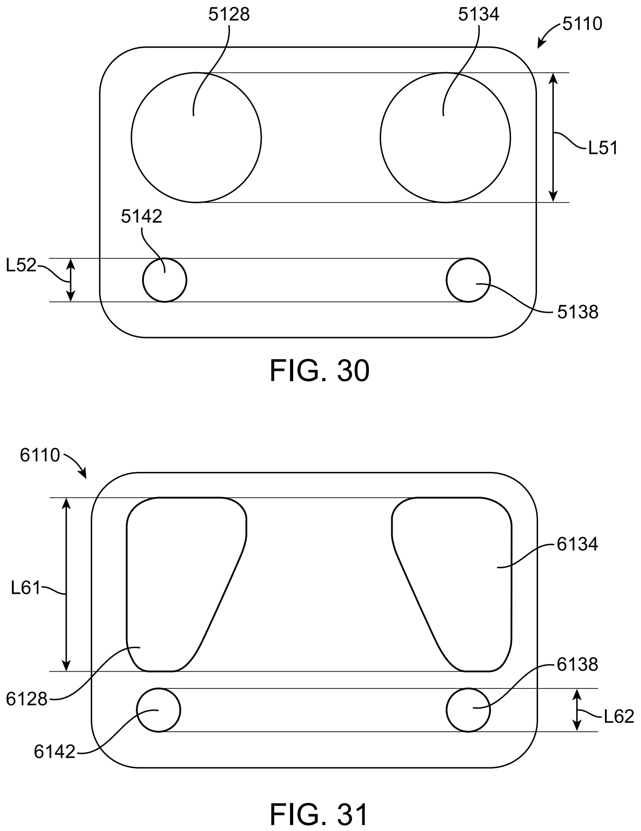

FIG. 30 illustrates another embodiment of a plate body 5110. Many features of the plate body 5110 are similar to those discussed above with regard to the fourth embodiment of the plate body 3110. As such, many of these features will not be discussed again below. Features similar to those discussed above will be labeled with a reference number that is a value of two thousand higher than the corresponding feature discussed above.

The plate body 5110 includes a first low-pressure opening 5128 (e.g., a low-pressure plate inlet), a second low-pressure opening 5134 (e.g., a low-pressure plate outlet), a first high-pressure opening 5138 (e.g., a high-pressure plate inlet), and a second high-pressure opening 5142 (e.g., a high-pressure plate outlet). Unlike the plate body 4110 which includes two low-pressure inlets (e.g., the first low-pressure opening 4126 and the second low-pressure opening 4130), the plate body 5110 includes only one low-pressure inlet (e.g., the first low-pressure opening 5128). In this embodiment, the first low-pressure line and the second low-pressure line are combined upstream of the heat exchanger.

The first low-pressure opening 5128 and the second low-pressure opening 5134 have a first cross-sectional shape. The first high-pressure opening 5138 and the second high-pressure opening 5142 have a second cross-sectional shape. The first cross-sectional shape is different than the second cross-sectional shape. More, specifically, the first cross-sectional shape has an area that is larger than area of the second cross-sectional shape.

In the illustrated embodiment, the first cross-sectional shape is a circle having a length (e.g., a diameter) of L51, and the second cross-sectional shape is a circle having a length (e.g., a diameter) of L52. The length L51 is larger than the length L52. More specifically, the length L51 is two times larger than the length L52. The length L51 may be less three times larger than the length L52. In some embodiments, the length L51 may be 2.9 times larger than the length L52.

FIG. 31 illustrates another embodiment of a plate body 6110. Many features of the plate body 6110 are similar to those discussed above with regard to the sixth embodiment of the plate body 3110. As such, many of these features will not be discussed again below. Features similar to those discussed above will be labeled with a reference number that is a value of one thousand higher than the corresponding feature discussed above.

The plate body 6110 includes a first low-pressure opening 6128 (e.g., a low-pressure plate inlet), a second low-pressure opening 6134 (e.g., a low-pressure plate outlet), a first high-pressure opening 6138 (e.g., a high-pressure plate inlet), and a second high-pressure opening 6142 (e.g., a high-pressure plate outlet). The first low-pressure opening 6128 and the second low-pressure opening 6134 have a first cross-sectional shape. The first high-pressure opening 6138 and the second high-pressure opening 6142 have a second cross-sectional shape. The first cross-sectional shape is different than the second cross-sectional shape.

The shape of the first low-pressure opening 6128 and the shape of the second low-pressure opening 6134 (e.g., the first cross-sectional shape) are non-circular shapes. More specifically the first cross-sectional shape is oblong. The first cross-sectional shape has a length of L61. The cross-sectional shape of the first high-pressure opening 6138 and the shape of the second high-pressure opening 6142 (e.g., the second cross-sectional shape) are circular. The second shape has a length (e.g., a diameter) of L62. The length L61 is longer than the length L62. In some embodiments, the length L61 is two times the length L62. In some embodiments, the length L61 is three times the length L62. In some embodiments, the length L61 is 4.2 times larger than the length L62.

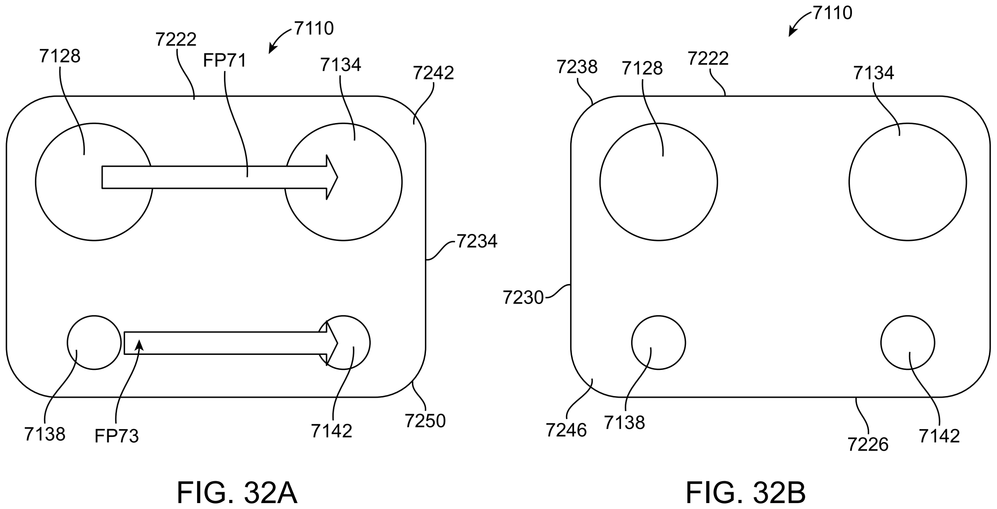

FIGS. 32A-33D illustrate another embodiment of a plate body 7110. Many features of the plate body 7110 are similar to those discussed above with regard to the sixth embodiment of the plate body 5110. As such, many of these features will not be discussed again below. Features similar to those discussed above will be labeled with a reference number that is a value of two thousand higher than the corresponding feature discussed above.

The plate body 7110 has a rectangular shape. The plate body 7110 is defined by a first side 9222, a second side 7226 opposite the first side 7222, a first end 7230, and a second end 7234 opposite the first end 7230. The plate body 7110 further includes a first corner 7238 connecting the first side 7222 and the first end 7230, a second corner 7242 connecting the first side 7222 and the second end 7234, a third corner 7246 connecting the first end 7230 and the second side 7226, and a fourth corner 7250 connecting the second side 7226 and the second end 7234.

The plate body 7110 includes a first low-pressure opening 7128 (e.g., a low-pressure plate inlet), a second low-pressure opening 7134 (e.g., a low-pressure plate outlet), a first high-pressure opening 7138 (e.g., a low-pressure plate outlet), and a second high-pressure opening 7142 (e.g., a high-pressure plate outlet). The first low-pressure opening 7128 is disposed adjacent the first corner 7238, and the second low-pressure opening 7134 is disposed adjacent the second corner 7242. The first high-pressure opening 7138 is disposed adjacent the third corner 8246, and the second high-pressure opening 7142 is disposed adjacent the fourth corner 7250.

On the plate body 7110, a low-pressure fluid path FP71 extends in a first direction across the plate body 7110 from the first low-pressure opening 7128 to the second low-pressure opening 7134. A high-pressure fluid path FP72 extends in a second direction across the plate body 7110 from the first high-pressure opening 7138 to the second high-pressure opening 7142. The high-pressure fluid path FP72 is parallel with the low-pressure fluid path FP71. In the illustrated embodiment, the first direction and the second direction are the same. In some embodiments, the first high-pressure opening 7138 and the second high-pressure opening 7142 may be switched such that the second direction is parallel but opposite of the first direction and that the low-pressure fluid path FP71 and the high-pressure fluid path FP72 are arranged in counter flow.

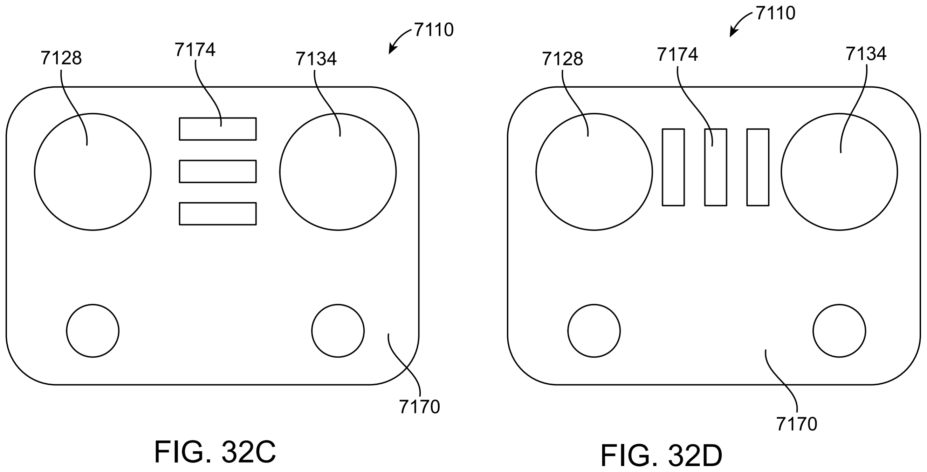

In FIG. 32C, a turbulator 7170 is disposed on the plate body 7110. The turbulator 7170 includes channels 7174 that extend partially across the plate body 7110. The channels 7174 extend in a third direction between the first end 7230 and the second end 7234. The third direction is the same as the first direction such that the low-pressure fluid path FP71 extends in the same direction as the channels 7174.

In FIG. 32D, a turbulator 7170 is disposed on the plate body 7110. The turbulator 7170 includes channels 7174 that extend partially across the plate body 7110. The channels 7174 extend in a third direction partially across the plate between the first side 7222 and the second side 7226. The third direction is transverse to the first directions such that the channels 7174 extend in a direction transverse to the low-pressure fluid path FP71. More specifically, the third direction is perpendicular to the low-pressure fluid path FP71 such that the channels 7174 extend in a direction perpendicular to the low-pressure fluid path FP71.

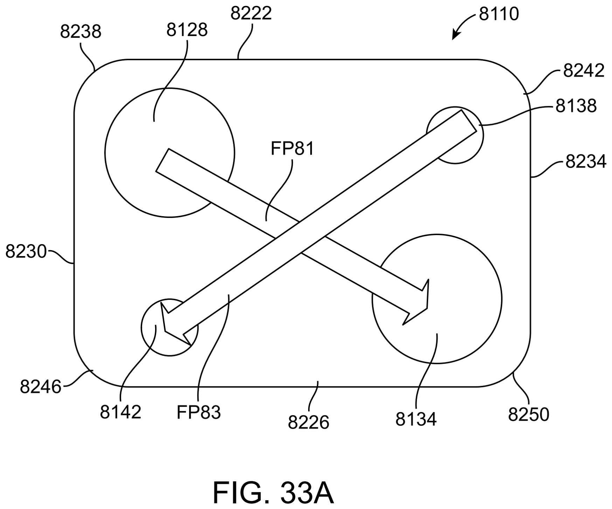

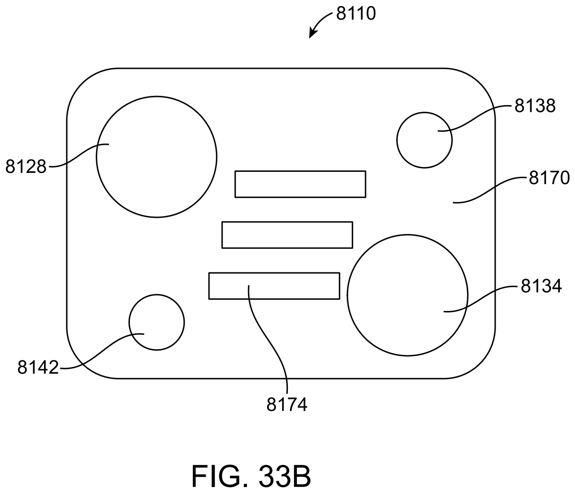

FIGS. 33A and 33B illustrate another embodiment of a plate body 8110. Many features of the plate body 8110 are similar to those discussed above with regard to the sixth embodiment of the plate body 3110. As such, many of these features will not be discussed again below. Features similar to those discussed above will be labeled with a reference number that is a value of three thousand higher than the corresponding feature discussed above.

The plate body 8110 has a rectangular shape. The plate body 8110 is defined by a first side 8222, a second side 8226 opposite the first side 8222, a first end 8230, and a second end 8234 opposite the first end 8230. The plate body 8110 further includes a first corner 8238 connecting the first side 8222 and the first end 8230, a second corner 8242 connecting the first side 8222 and the second end 8234, a third corner 8246 connecting the first end 8230 and the second side 8226, and a fourth corner 8250 connecting the second side 8226 and the second end 8234.

The plate body 8110 includes a first low-pressure opening 8128 (e.g., a low-pressure plate inlet), a second low-pressure opening 8134 (e.g., a low-pressure plate outlet), a first high-pressure opening 8138 (e.g., a high-pressure plate inlet), and a second high-pressure opening 8142 (e.g., a high-pressure plate outlet). The first low-pressure opening 8128 is disposed adjacent the first corner 8238, and the second low-pressure opening 8134 is disposed adjacent the fourth corner 8250. The first high-pressure opening 8138 is disposed adjacent the second corner 8242, and the second high-pressure opening 8142 is disposed adjacent the third corner 8246.

On the plate body 8110, a low-pressure fluid path FP81 extends in a first direction across the plate body 8110 from the first low-pressure opening 8128 to the second low-pressure opening 8134. A high-pressure fluid path FP82 extends in a second direction across the plate body 8110 from the first high-pressure opening 8138 to the second high-pressure opening 8142. The second direction is transverse to the first direction such that the low-pressure fluid path FP81 is transverse to the second high-pressure opening 8142. More specifically, the second direction may be perpendicular to the first direction such that the low-pressure fluid path FP81 may be perpendicular to the second high-pressure opening 8142. The low-pressure fluid path FP81 and the high-pressure fluid path FP82 are arranged in cross flow.

With reference to FIG. 33B, there may be a turbulator 8170 disposed on the plate body 8110. The turbulator 8170 may include channels 8174. The channels 8174 extend partially along the plate body 8110 between the first end 8230 and the second end 8234. The channels 8174 extend in a third direction. The third direction is transverse to the first direction such that the low-pressure fluid path FP81 is transverse to the channels 8174.

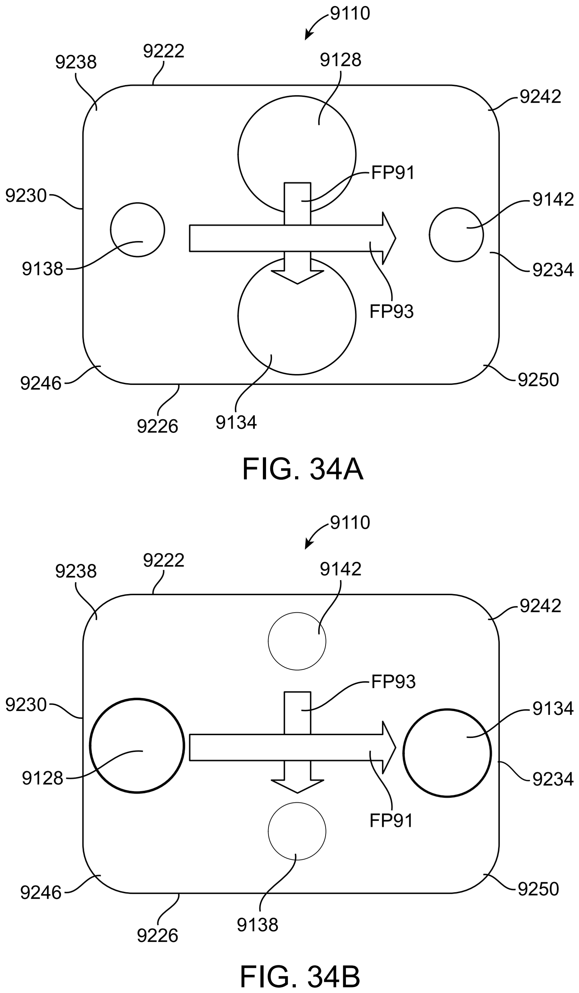

FIGS. 34A34B illustrates another embodiment of a plate body 9110. Many features of the plate body 9110 are similar to those discussed above with regard to the sixth embodiment of the plate body 5110. As such, many of these features will not be discussed again below. Features similar to those discussed above will be labeled with a reference number that is a value of four thousand higher than the corresponding feature discussed above.

The plate body 9110 has a rectangular shape. The plate body 9110 is defined by a first side 9222, a second side 9226 opposite the first side 9222, a first end 9230, and a second end 9234 opposite the first end 9230. The plate body 9110 further includes a first corner 9238, a second corner 9242, a third corner 9246, and a fourth corner 9250.

The plate body 9110 includes a first low-pressure opening 9128 (e.g., a low-pressure plate inlet), a second low-pressure opening 9134 (e.g., a low-pressure plate outlet), a first high-pressure opening 9138 (e.g., a high-pressure plate inlet), and a second high-pressure opening 9142 (e.g., a high-pressure plate outlet).

In FIG. 34A, the first low-pressure opening 9128 is disposed along the first side 9222, and the second low-pressure opening 9134 is disposed along the second side 9226. The first high-pressure opening 9138 is disposed along the first end 9230, and the second high-pressure opening 9142 is disposed along the second end 9234.

In FIG. 34B, the first low pressure opening 9128 is disposed along the first end 9230, and the second low-pressure opening 9134 is disposed along the second end 9234. The first high-pressure opening 9138 is disposed along the second side 9226, and the second high-pressure opening 9142 is disposed along the first side 9222.

On the plate body 9110, a low-pressure fluid path FP91 extends in a first direction across the plate body 9110 from the first low-pressure opening 9128 to the second low-pressure opening 9134. A high-pressure fluid path FP92 extends in a second direction across the plate body 9110 from the first high-pressure opening 9138 to the second high-pressure opening 9142. The second direction is transverse to the first direction such that the high-pressure fluid path FP92 is transverse to the low-pressure fluid path FP91. More specifically, the second direction is perpendicular to the first direction such that the high-pressure fluid path FP92 is perpendicular to the low-pressure fluid path FP91. The low-pressure fluid path FP91 and the high-pressure fluid path FP92 are arranged in cross flow.

Various additional features and advantages of the invention are set forth in the following claims.

In the following another aspects of the disclosure are given.

In another example a heat exchanger is provided comprising: a low-pressure inlet configured to connect to a low-pressure inlet line to supply a low-pressure fluid to the low-pressure inlet; a low-pressure outlet configured to connect to a low-pressure outlet line to supply the low-pressure fluid to the low-pressure outlet line; a high-pressure inlet configured to connect to a high-pressure inlet line to supply a high-pressure fluid to the high-pressure inlet; a high-pressure outlet configured to connect to a high-pressure outlet line to supply the high-pressure fluid to the high-pressure outlet line; and a plurality of plates, each plate having a low-pressure plate inlet fluidly connected to the low-pressure inlet, a low-pressure plate outlet fluidly connected to the low-pressure outlet, a high-pressure plate inlet fluidly connected to the high-pressure inlet, and a high-pressure plate outlet fluidly connected to the high-pressure outlet, wherein the plurality of plates includes a first group of plates and a second group of plates, the first group of plates are alternatingly stacked with the second group of plates, the first group of plates and the second group of plates are configured to allow the high-pressure fluid to transfer heat to the low-pressure fluid, wherein a first space is formed between one of the plates of the first group of plates and one of the plates of the second group of plates when the plate of the first group of plates is positioned below the plate of the second group of plates, wherein a second space is formed between one of the plates of the first group of plates and one of the plates of the second group of plates when the plate of second group of plates is positioned below the plate of the first group of plates, wherein the first space provides fluid communication between the low-pressure plate inlet and the low-pressure plate outlet and inhibits fluid communication between the high-pressure plate inlet and the high-pressure plate outlet, wherein the second space provides fluid communication between the high-pressure plate inlet and the high-pressure plate outlet and inhibits fluid communication between the low-pressure plate inlet and the low-pressure plate outlet, wherein the low-pressure plate inlet and the low-pressure plate outlet have a first cross-sectional shape, and the high-pressure plate inlet and the high-pressure plate outlet have a second cross-sectional shape, the first cross-sectional shape is different than the second cross-sectional shape.

The heat exchanger of the above example, wherein an area of the first cross-sectional shape is larger than an area of the second cross-sectional shape.

The heat exchanger of the above example, wherein the first cross-sectional shape is non-circular, and the second cross-sectional shape is circular.

The heat exchanger of the above example, wherein the first cross-sectional shape is oblong.

The heat exchanger of the above example, wherein a perimeter of each of the plates defines a rectangular shape and includes a first side, a second side opposite the first side, a first end, and a second end opposite the first end, a first corner between the first side and the first end, a second corner between the first side and the second end, a third corner between the second side and the first end, and a fourth corner between the second side and the second end.

The heat exchanger of the above example, wherein: the low-pressure plate inlet is located adjacent the first corner, the low-pressure plate outlet is located adjacent the third corner, the high-pressure plate inlet is located adjacent the second corner, and the high-pressure plate outlet is located adjacent the fourth corner.

The heat exchanger of the above example, wherein the low-pressure plate inlet is located adjacent the first corner, the low-pressure plate outlet is located adjacent the second corner, the high-pressure plate inlet is located adjacent the fourth corner, and the high-pressure plate outlet is located adjacent the third corner.

The heat exchanger of the above example, wherein: the low-pressure plate inlet is located along the first side, the low-pressure plate outlet is located along the second side, the high-pressure plate inlet is located adjacent the first end, and the high-pressure plate outlet is located adjacent the second end.

The heat exchanger of the above example, wherein at least some of the plates of the plurality of plates include a turbulator extending at least partially across the plate.

The heat exchanger of the above example, wherein: the turbulator includes a plurality of fins, each of the fins in the plurality of fins having a fin width, the low-pressure plate inlet is each spaced a distance away from a perimeter of the plates, and the distance is at least twice the fin width.

The heat exchanger of the above example, wherein: the turbulator includes a channel, the channel extends at least partially between the low-pressure plate inlet and the low-pressure plate outlet, each of the plates in the first group of plates is configured to allow the low-pressure fluid to flow in a first direction from the low-pressure plate inlet to the low-pressure plate outlet, the channel extends in a second direction, and the second direction is the same as the first direction.

The heat exchanger of the above example, wherein the turbulator includes a channel, the channel extends at least partially between the low-pressure plate inlet and the low-pressure plate outlet, each of the plates in the first group of plates is configured to allow the low-pressure fluid to flow in a first direction from the low-pressure plate inlet to the low-pressure plate outlet, the channel extends in a second direction, and the second direction is perpendicular to the first direction.

The heat exchanger of the above example, wherein the turbulator includes a channel, the channel extends at least partially between the low-pressure plate inlet and the low-pressure plate outlet, each of the plates in the first group of plates is configured to allow the low-pressure fluid to flow in a first direction from the low-pressure plate inlet to the low-pressure plate outlet, the channel extends in a second direction, and the second direction is transverse to the first direction. It follows a list of examples:
1. A heat exchanger comprising: a first low-pressure inlet configured to connect to a first low-pressure line to supply a low-pressure fluid to the first low-pressure inlet; a second low-pressure inlet configured to connect to a second low-pressure line to supply the low-pressure fluid to the second low-pressure inlet; a low-pressure outlet configured to connect to a third low-pressure line to supply the low-pressure fluid to the third low-pressure line; a high-pressure inlet configured to connect to a first high-pressure line to supply a high-pressure fluid to the high-pressure inlet; a high-pressure outlet configured to connect to a second high-pressure line to supply the high-pressure fluid to the second high-pressure line; and a plurality of plates, each plate having a first low-pressure opening fluidly connected to the first low-pressure inlet, a second low-pressure opening fluidly connected to the second low-pressure inlet, a third low-pressure opening fluidly connected to the low-pressure outlet, a first high-pressure opening fluidly connected to the high-pressure inlet, and a second high-pressure opening fluidly connected to the high-pressure outlet, wherein the plurality of plates includes a first group of plates and a second group of plates, the first group of plates are alternatingly stacked with the second group of plates, the first group of plates and the second group of plates are configured to allow the high-pressure fluid to transfer heat to the low-pressure fluid, wherein a first space is formed between one of the plates of the first group of plates and one of the plates of the second group of plates when the plate of the first group of plates is positioned below the plate of the second group of plates, wherein a second space is formed between one of the plates of the first group of plates and one of the plates of the second group of plates when the plate of the second group of plates is positioned below the plate of the first group of plates, wherein the first space provides fluid communication between the first low-pressure opening and the third low-pressure opening, provides fluid communication between the second low-pressure opening and the third low-pressure opening, and inhibits fluid communication between the first high-pressure opening and the second high-pressure opening, wherein the second space provides fluid communication between the first high-pressure opening and the second high-pressure opening, inhibits fluid communication between the first low-pressure opening and the third low-pressure opening, and inhibits fluid communication between the second low-pressure opening and the third low-pressure opening.
2. The heat exchanger of example 1, wherein each of the plates in the first group of plates include a wall between the first low-pressure opening and the second low-pressure opening, the wall at least partially inhibiting fluid communication between the first low-pressure opening and the second low-pressure opening.
3. The heat exchanger of example 1 or 2, wherein one of the first group of plates and one of the second group of plates are adjacent plates, the adjacent plates are spaced a first height apart.
4. The heat exchanger of example 2 or 3, wherein the wall has a second height, and the first height is the same as the second height or the first height is larger than the second height.
5. The heat exchanger of any one of the preceding examples, wherein the first low-pressure opening is a first distance away from the third low-pressure opening, the second low-pressure opening is a second distance away from the third low-pressure opening.
6. The heat exchanger of example 5, wherein the wall extends along each of the plates in the first group of plates for a third distance, and the third distance is less than the first distance and the second distance and/or the third distance is less than half of the first distance and/or less than half of the second distance.
7. The heat exchanger of any one of the preceding examples 1-5, wherein the first distance is the same as the second distance or the first distance is the less than the second distance.
8. The heat exchanger of any one of the preceding examples, wherein a plate body of each of the plates defines a rectangular shape and includes a first side, a second side opposite the first side, a first end, and a second end opposite the first end, a first corner between the first side and the first end, a second corner between the first side and the second end, a third corner between the second side and the first end, and a fourth corner between the second side and the second end.
9. The heat exchanger of example 8, wherein: the first low-pressure opening is located adjacent the first corner, the second low-pressure opening is located adjacent the third corner, the third low-pressure opening is located along the second end, the first high-pressure opening is located along the first side, and the second high-pressure opening is located along the second side.
10. The heat exchanger of example 8, wherein: the first low-pressure opening is located adjacent the first corner, the second low-pressure opening is located adjacent the third corner, the third low-pressure opening is located adjacent the fourth corner, the first high-pressure opening is located along the first side, and the second high-pressure opening is located along the second side.
11. The heat exchanger of example 8, wherein: the first low-pressure opening is located adjacent the first corner, the second low-pressure opening is located adjacent the third corner, the third low-pressure opening is located adjacent the second corner, the first high-pressure opening is located adjacent the fourth corner, and the second high-pressure opening is located along the first side.
12. The heat exchanger of any one of the preceding examples, wherein a plate body of each of the plates defines a pentagon and includes five corners.
13. The heat exchanger of example 12, wherein the first low-pressure opening, the second low-pressure opening, the third low-pressure opening, the first high-pressure opening, and the second high-pressure opening are each located in one of the five corners and/or at least some of the plates in the plurality of plates include a turbulator that extends at least partially along a surface of the plate, and the turbulator includes a plurality of fins that each have a fin width.
14. The heat exchanger of example 13, wherein the first low-pressure opening is spaced a distance away from the perimeter of the plates, and the distance is at least twice the fin width.
15. The heat exchanger of any one of the preceding example, wherein: the first low-pressure opening, the second low-pressure opening, the third low-pressure opening have a first shape, the first high-pressure opening and the second high-pressure opening have a second shape, and the first shape is different than the second.

## Claims

1. A heat exchanger comprising:
a low-pressure inlet configured to connect to a low-pressure inlet line to supply a low-pressure fluid to the low-pressure inlet;
a low-pressure outlet configured to connect to a low-pressure outlet line to supply the low-pressure fluid to the low-pressure outlet line;
a high-pressure inlet configured to connect to a high-pressure inlet line to supply a high-pressure fluid to the high-pressure inlet;
a high-pressure outlet configured to connect to a high-pressure outlet line to supply the high-pressure fluid to the high-pressure outlet line; and
a plurality of plates, each plate having
a low-pressure plate inlet fluidly connected to the low-pressure inlet,
a low-pressure plate outlet fluidly connected to the low-pressure outlet,
a high-pressure plate inlet fluidly connected to the high-pressure inlet, and
a high-pressure plate outlet fluidly connected to the high-pressure outlet,
wherein the plurality of plates includes a first group of plates and a second group of plates,
the first group of plates are alternatingly stacked with the second group of plates, the first group of plates and the second group of plates are configured to allow the high-pressure fluid to transfer heat to the low-pressure fluid,
wherein a first space is formed between one of the plates of the first group of plates and one of the plates of the second group of plates when the plate of the first group of plates is positioned below the plate of the second group of plates,
wherein a second space is formed between one of the plates of the first group of plates and one of the plates of the second group of plates when the plate of second group of plates is positioned below the plate of the first group of plates,
wherein the first space provides fluid communication between the low-pressure plate inlet and the low-pressure plate outlet and inhibits fluid communication between the high-pressure plate inlet and the high-pressure plate outlet,
wherein the second space provides fluid communication between the high-pressure plate inlet and the high-pressure plate outlet and inhibits fluid communication between the low-pressure plate inlet and the low-pressure plate outlet,
wherein the low-pressure plate inlet and the low-pressure plate outlet have a first cross-sectional shape, and the high-pressure plate inlet and the high-pressure plate outlet have a second cross-sectional shape, the first cross-sectional shape is different than the second cross-sectional shape.

2. The heat exchanger of claim 1, wherein an area of the first cross-sectional shape is larger than an area of the second cross-sectional shape.

3. The heat exchanger of claim 1, wherein the first cross-sectional shape is non-circular, and the second cross-sectional shape is circular.

4. The heat exchanger of claim 2, wherein the first cross-sectional shape is oblong.

5. The heat exchanger of claim 1, wherein a perimeter of each of the plates defines a rectangular shape and includes a first side, a second side opposite the first side, a first end, and a second end opposite the first end, a first corner between the first side and the first end, a second corner between the first side and the second end, a third corner between the second side and the first end, and a fourth corner between the second side and the second end.

6. The heat exchanger of claim 5, wherein:
the low-pressure plate inlet is located adjacent the first corner,
the low-pressure plate outlet is located adjacent the third corner,
the high-pressure plate inlet is located adjacent the second corner, and
the high-pressure plate outlet is located adjacent the fourth corner.

7. The heat exchanger of claim 5, wherein:
the low-pressure plate inlet is located adjacent the first corner,
the low-pressure plate outlet is located adjacent the second corner,
the high-pressure plate inlet is located adjacent the fourth corner, and
the high-pressure plate outlet is located adjacent the third corner.

8. The heat exchanger of claim 5, wherein:
the low-pressure plate inlet is located along the first side,
the low-pressure plate outlet is located along the second side,
the high-pressure plate inlet is located adjacent the first end, and
the high-pressure plate outlet is located adjacent the second end.

9. The heat exchanger of claim 1, wherein at least some of the plates of the plurality of plates include a turbulator extending at least partially across the plate.

10. The heat exchanger of claim 9, wherein the turbulator includes a plurality of fins, each of the fins in the plurality of fins having a fin width, the low-pressure plate inlet is each spaced a distance away from a perimeter of the plates, and the distance is at least twice the fin width.

11. The heat exchanger of claim 9, wherein the turbulator includes a channel, the channel extends at least partially between the low-pressure plate inlet and the low-pressure plate outlet, each of the plates in the first group of plates is configured to allow the low-pressure fluid to flow in a first direction from the low-pressure plate inlet to the low-pressure plate outlet,
the channel extends in a second direction, and
the second direction is the same as the first direction.

12. The heat exchanger of claim 9, wherein the turbulator includes a channel, the channel extends at least partially between the low-pressure plate inlet and the low-pressure plate outlet, each of the plates in the first group of plates is configured to allow the low-pressure fluid to flow in a first direction from the low-pressure plate inlet to the low-pressure plate outlet,
the channel extends in a second direction, and
the second direction is perpendicular to the first direction.

13. The heat exchanger of claim 9, wherein the turbulator includes a channel, the channel extends at least partially between the low-pressure plate inlet and the low-pressure plate outlet, each of the plates in the first group of plates is configured to allow the low-pressure fluid to flow in a first direction from the low-pressure plate inlet to the low-pressure plate outlet,
the channel extends in a second direction, and
the second direction is transverse to the first direction.
